# EUROPEAN PATENT APPLICATION

(11) **EP 4 725 839 A1**
(43) Date of publication of application: **15.04.2026**
(21) Application number: 24818994.6
(22) Date of filing: 19.03.2024
(51) Int. Cl.: B64C 27/08, B64C 39/02

(54) **VERTICAL TAKEOFF AND LANDING AIRCRAFT**

(30) Priority: 08.06.2023 JP 2023094449
(71) Applicant: Japan Aerospace Exploration Agency, Tokyo 182-8522 (JP)
(72) Inventor: SUGAWARA, Hideaki, Chofu-shi, Tokyo 182-8522 (JP); YASUE, Kanako, Chofu-shi, Tokyo 182-8522 (JP); TANABE, Yasutada, Chofu-shi, Tokyo 182-8522 (JP); KAMEDA, Masaharu, Chofu-shi, Tokyo 182-8522 (JP)
(74) Representative: Michalski Hüttermann & Partner Patentanwälte mbB
(86) International application number: PCT/JP2024/010644
(87) International publication number: WO 2024/252755

(57) **Abstract**

A vertical takeoff and landing aircraft according to an embodiment of the present invention includes a pair of right and left rod-shaped support members, a propulsion propeller, two or more rotors for vertical climb and descent, and a controller. The pair of right and left rod-shaped support members extend in a front-rear direction and are provided on both a right side and a left side. The two or more rotors are disposed on each of the rod-shaped support members in the front-rear direction, each include a plurality of blades, and rotate in a predetermined rotation direction to generate lift. The controller rotates the rotor during forward flight and controls a rotational speed of the rotor and a pitch angle of the blade to obtain an advance ratio at which an effective lift-to-drag ratio of the rotor is a threshold or more, the advance ratio representing a ratio between a flight speed and a blade tip speed of the rotor.

## Description

### Technical Field

The present invention relates to a vertical takeoff and landing aircraft.

### Background Art

A normal multi-rotor vertical takeoff and landing aircraft includes a plurality of rotors, and during forward flight, the rotors are tilted forward to generate lift and propulsive force simultaneously. In addition, a compound-type (lift-and-cruise type) multi-rotor vertical takeoff and landing aircraft including rotors for vertical takeoff and landing and a propulsion propeller and also including fixed wings (see Patent Literatures 1 to 5) stops rotation of the rotates and generates propulsive force by the propulsion propeller to generate lift by the fixed wings during forward flight.

In addition, Non-Patent Literatures 1 and 2 each describe a multi-rotor vertical takeoff and landing aircraft including four rotors and a propulsion propeller, which generates lift by the rotation of the rotors and moves forward by the propulsion propeller during forward flight. In such a vertical takeoff and landing aircraft, flow field interference occurs, in which a slipstream (downwash) generated by the rotor on the front side interferes with the rotor on the rear side, which may cause a deterioration in rotor performance due to the flow field interference. Non-Patent Literatures 1 and 2 describe the use of lift offset characteristics of the rotors based on a variable pitch and a variable rotational speed using the four rotors to improve rotor performance.

### Citation List

### Patent Literature

Patent Literature 1: Japanese Patent Application Laid-open No. 2022-151924
Patent Literature 2: Japanese Patent Application Laid-open No. 2022-148991
Patent Literature 3: US Patent No. 10046853
Patent Literature 4: US Patent Application Publication No. 2019-0127056
Patent Literature 5: Chinese Patent Application Publication No. 115042968

### Non-Patent Literature

Non-Patent Literature 1: Sayama, Y.; Hayami, K.; Tanabe, Y.; Sugawara, H.; Kameda, M.; "PERFORMANCE OF A DUAL-CONTROLLED ROTOR IN LEVEL FLIGHT", Proceedings of 47th European Rotorcraft Forum, 7-9th Sept. 2021, Paper# 95
Non-Patent Literature 2: Sayama, Y.; Sugawara, H.; Tanabe, Y.; Kameda, M.; "Impact of Rear-Rotor Vertical Location on Aerodynamics of Multi-Rotor in Forward Flight", Proceedings of 54th Fluid Dynamics Conference/40th Aerospace Numerical Simulation Symposium, June 29 to July 1, 2022, JSASS-2022-2033-F+A-1B15

### Disclosure of Invention

### Technical Problem

A multi-rotor vertical takeoff and landing aircraft needs to generate lift and propulsive force simultaneously and thus has a problem of high-speed performance. In addition, a compound-type multi-rotor vertical takeoff and landing aircraft needs to generate lift by the fixed wings during forward flight, which causes a problem of an increase in size of the aircraft due to the fixed wings.

In view of the circumstances as described above, it is an object of the present invention to provide a vertical takeoff and landing aircraft capable of downsizing and speed-up.

### Solution to Problem

In order to achieve the above object, a vertical takeoff and landing aircraft according to an embodiment of the present invention includes a pair of right and left rod-shaped support members, a propulsion propeller, two or more rotors for vertical climb and descent, and a controller. The pair of right and left rod-shaped support members extend in a front-rear direction and are provided on both a right side and a left side. The two or more rotors are disposed on each of the rod-shaped support members in the front-rear direction, each include a plurality of blades, and rotate in a predetermined rotation direction to generate lift. The controller rotates the rotor during forward flight and controls a rotational speed of the rotor and a pitch angle of the blade to obtain an advance ratio at which an effective lift-to-drag ratio of the rotor is a threshold or more, the advance ratio representing a ratio between a flight speed and a blade tip speed of the rotor.

In the vertical takeoff and landing aircraft according to an embodiment of the present invention, during forward flight, the lift is generated by the rotor, and the propulsive force is generated by the propulsion propeller. Generating the lift during forward flight by the rotor in such a manner makes it possible to ensure part or all of the lift during forward flight by the rotor and makes it possible to downsize the aircraft. In addition, providing the propulsion propeller makes it possible to speed up. Further, during forward flight, controlling the rotational speed of the rotor to obtain an advance ratio (flight speed/blade tip speed) at which the effective lift-to-drag ratio of the rotor is a threshold or more makes it possible to adjust a lift distribution such that larger lift is generated on the advancing side and no lift is generated or a similar situation is caused on the retreating side on the rotating surface of the rotor. This makes it possible to adjust a slipstream distribution (downwash distribution) generated by the rotors, reduce a flow field interference that is an interference of the front rotor with the rear rotor due to the downwash, and suppress a reduction in rotor performance due to the flow field interference. Suppressing a reduction in rotor performance due to the flow field interference makes it possible to reliably ensure part or all of the lift during forward flight by the rotors, thus making it possible to downsize the aircraft.

The controller may acquire flight speed information of the vertical takeoff and landing aircraft, use the flight speed information to calculate a range of the rotational speed of the rotor to obtain an advance ratio at which the effective lift-to-drag ratio of the rotor is a threshold or more, on the basis of first data prepared in advance indicating a relationship between the effective lift-to-drag ratio of the rotor and the advance ratio, use the flight speed information to calculate a range of the pitch angle of the blade, in which lift necessary for the rotor is generated, within the calculated range of the rotational speed of the rotor, and determine the rotational speed of the rotor and the pitch angle of the blade within the calculated range of the rotational speed of the rotor and the calculated range of the pitch angle of the blade.

The controller may acquire attitude information of the vertical takeoff and landing aircraft, and determine the rotational speed of the rotor and the pitch angle of the blade while taking into consideration the attitude information.

The vertical takeoff and landing aircraft may further include a storage device that stores the first data and second data indicating a relationship between the rotational speed of the rotor, the pitch angle of the blade, and the effective lift-to-drag ratio of the rotor for each flight speed, the first data and the second data being prepared in advance. The controller may use, when calculating the rotational speed of the rotor, the flight speed information to calculate a range of the rotational speed of the rotor to obtain an advance ratio at which the effective lift-to-drag ratio of the rotor is a threshold or more, on the basis of the first data, and use, when calculating the range of the pitch angle of the blade, the flight speed information to calculate a range of the pitch angle of the blade, in which lift necessary for the rotor is generated, within the calculated range of the rotational speed of the rotor on the basis of the second data.

The advance ratio at which the effective lift-to-drag ratio of the rotor is a threshold or more may be 0.5 or more.

The rotors may be disposed in the same number on each of the rod-shaped support members to form a plurality of rotor groups each including a pair of right and left rotors. The controller may control the rotational speed of the rotor belonging to one rotor group of the plurality of rotor groups to be different from the rotational speed of the rotor belonging to another rotor group under a condition where the rotational speed of each rotor falls within the calculated range of the rotational speed of the rotor.

The controller may control the rotational speed of the rotor and the pitch angle of the blade to obtain an advance ratio at which the effective lift-to-drag ratio of the rotor is a threshold or more during forward flight at a flight speed of a predetermined speed or higher.

The predetermined speed may be 100 km/h (approximately 28 m/s).

The controller may rotate two of the rotors adjacent to each other one behind the other, the centers of the rotors being located on an identical straight line parallel to the front-rear direction, in opposite rotation directions during the forward flight.

Three of the rotors may be disposed on each of the rod-shaped support members such that the centers of the three rotors are located on the identical straight line parallel to the front-rear direction. The three rotors disposed on the rod-shaped support member on the right side may be a right-side first rotor, a right-side second rotor, and a right-side third rotor arranged sequentially from front to rear. The three rotors disposed on the rod-shaped support member on the left side may be a left-side first rotor, a left-side second rotor, and a left-side third rotor arranged sequentially from front to rear. The controller may rotate the right-side first rotor, the right-side third rotor, and the left-side second rotor in a counterclockwise rotation direction and rotate the right-side second rotor, the left-side first rotor, and the left-side third rotor in a clockwise rotation direction when viewed from above.

In the two or more rotors disposed on each of the rod-shaped support members, two rotors adjacent to each other in the front-rear direction may be located with the center of one of the two rotors being shifted from the center of another one of the two rotors in a right-left direction.

Three of the rotors may be disposed on each of the rod-shaped support members at an identical position in the up-down direction. The three rotors disposed on the rod-shaped support member on the right side may be a right-side first rotor, a right-side second rotor, and a right-side third rotor arranged sequentially from front to rear. The three rotors disposed on the rod-shaped support member on the left side may be a left-side first rotor, a left-side second rotor, and a left-side third rotor arranged sequentially from front to rear. The right-side second rotor may be shifted outward in the right-left direction relative to the right-side first rotor and the right-side third rotor by a radius of a rotating surface of the rotor. The left-side second rotor may be shifted outward in the right-left direction relative to the left-side first rotor and the left-side third rotor by the radius of the rotating surface of the rotor. The controller may rotate the right-side first rotor, the right-side second rotor, and the left-side third rotor in a counterclockwise rotation direction and rotate the right-side third rotor, the left-side first rotor, and the left-side second rotor in a clockwise rotation direction when viewed from above.

Three or more of the rotors may be disposed on each of the rod-shaped support members.

The rotors may be disposed in the same number on each of the rod-shaped support members to form a plurality of rotor groups each including a pair of right and left rotors. The rotors belonging to one rotor group of the plurality of rotor groups may be different in position in the up-down direction from the rotors belonging to another rotor group.

Three of the rotors may be disposed on each of the rod-shaped support members on an identical straight line parallel to the front-rear direction in plan view. The three rotors disposed on the rod-shaped support member on the right side may be a right-side first rotor, a right-side second rotor, and a right-side third rotor arranged sequentially from front to rear. The three rotors disposed on the rod-shaped support member on the left side may be a left-side first rotor, a left-side second rotor, and a left-side third rotor arranged sequentially from front to rear. The right-side first rotor, the right-side second rotor, the left-side first rotor, and the left-side second rotor may be located at an identical position in the up-down direction, and the right-side third rotor and the left-side third rotor may be located at a position higher than the right-side first rotor, the right-side second rotor, the left-side first rotor, and the left-side second rotor. The controller may rotate the right-side first rotor, the right-side third rotor, and the left-side second rotor in a counterclockwise rotation direction and rotate the right-side second rotor, the left-side first rotor, and the left-side third rotor in a clockwise rotation direction when viewed from above.

Three of the rotors may be disposed on each of the rod-shaped support members on an identical straight line parallel to the front-rear direction in plan view. The three rotors disposed on the rod-shaped support member on the right side may be a right-side first rotor, a right-side second rotor, and a right-side third rotor arranged sequentially from front to rear. The three rotors disposed on the rod-shaped support member on the left side may be a left-side first rotor, a left-side second rotor, and a left-side third rotor arranged sequentially from front to rear. The right-side first rotor, the right-side third rotor, the left-side first rotor, and the left-side third rotor may be located at an identical position in the up-down direction, and the right-side second rotor and the left-side second rotor may be located at a position higher than the right-side first rotor, the right-side third rotor, the left-side first rotor, and the left-side third rotor. The controller may rotate the right-side first rotor, the right-side second rotor, and the left-side third rotor in a counterclockwise rotation direction and rotate the right-side third rotor, the left-side first rotor, and the left-side second rotor in a clockwise rotation direction when viewed from above.

The vertical takeoff and landing aircraft may further include: a fuselage; and a fixed wing that is connected to the fuselage and extends in a right-left direction to couple the pair of right and left rod-shaped support members to each other.

The vertical takeoff and landing aircraft may further include a flight control surface that is disposed on the fixed wing and generates harmonic vibration in an opposite phase of vibration derived from the rotor.

The rotor may be disposed on a bottom of the rod-shaped support member.

The vertical takeoff and landing aircraft may further include a vertical tail that is disposed on a lower rear of the rod-shaped support member and extends downward, in which a tip of the vertical tail may be located at a position lower than a rotating surface of the propulsion propeller.

The controller may control a rotor located most forward to tilt a rotating surface of the rotor forward with respect to an advance direction and cause the rotor to function as a rotor for propulsion in addition to or instead of the propulsion propeller during forward flight.

The controller may control the rotational speed of a rotor located most forward and/or the pitch angle of the blade of the rotor located most forward such that lift and drag of the rotor located most forward are minimized during forward flight.

The rotors may be disposed in the same number on each of the rod-shaped support members to form a plurality of rotor groups each including a pair of right and left rotors, and the number of blades of the rotors belonging to one rotor group of the plurality of rotor groups may be different from the number of blades of the rotors belonging to another rotor group. Advantageous Effects of Invention

According to the present invention, it is possible to provide a vertical takeoff and landing aircraft capable of downsizing and speed-up.

Note that the effects described herein are not necessarily limited and any effects described in the present disclosure may be produced.

### Brief Description of Drawings

[Fig. 1] Fig. 1 is a schematic perspective view of a vertical takeoff and landing aircraft according to a first embodiment of the present invention.
[Fig. 2] Fig. 2 is a schematic plan view of the vertical takeoff and landing aircraft according to the first embodiment.
[Fig. 3] Fig. 3 is a schematic side view of the vertical takeoff and landing aircraft according to the first embodiment.
[Fig. 4] Fig. 4 is a block diagram showing a configuration of a control system of a rotor of the vertical takeoff and landing aircraft according to each embodiment of the present invention.
[Fig. 5] Fig. 5 is a diagram for describing control of the rotor of the vertical takeoff and landing aircraft according to each embodiment of the present invention.
[Fig. 6] Fig. 6 is a diagram for describing control of the rotor of the vertical takeoff and landing aircraft according to each embodiment of the present invention.
[Fig. 7] Fig. 7 is a control flow chart by a controller of the vertical takeoff and landing aircraft according to each embodiment of the present invention.
[Fig. 8] (A) is a conceptual diagram of flow field interference of front and rear rotors of the vertical takeoff and landing aircraft in which control of a rotational speed according to the present invention is not performed, and (B) is a conceptual diagram of flow field interference of front and rear rotors of the vertical takeoff and landing aircraft according to each embodiment in which the control of a rotational speed according to the present invention is controlled.
[Fig. 9] Fig. 9 is a schematic plan view of a vertical takeoff and landing aircraft according to a second embodiment of the present invention.
[Fig. 10] (A) is a conceptual diagram of flow field interference of the rotors of the vertical takeoff and landing aircraft of the first embodiment, and (B) is a conceptual diagram of flow field interference of the rotors of the vertical takeoff and landing aircraft of the second embodiment.
[Fig. 11] (A) and (B) are each a schematic side view of a vertical takeoff and landing aircraft according to a third embodiment of the present invention.
[Fig. 12] Fig. 12 is a cross-sectional view of a fixed wing for describing the motion of a flight control surface of a vertical takeoff and landing aircraft according to a fourth embodiment of the present invention.
[Fig. 13] (A) and (B) are each a graph for describing changes in vibration on the entire vertical takeoff and landing aircraft by harmonic vibration of the flight control surface of the vertical takeoff and landing aircraft according to the fourth embodiment.
[Fig. 14] (A) is a schematic side view showing a state of downwash generated downward below the rotors during takeoff and landing of the vertical takeoff and landing aircraft according to the first embodiment, and (B) is a schematic side view showing a state of downwash generated downward below the rotors during takeoff and landing of a vertical takeoff and landing aircraft according to a fifth embodiment of the present invention.
[Fig. 15] Fig. 15 is a schematic side view of a vertical takeoff and landing aircraft according to a sixth embodiment of the present invention.
[Fig. 16] Fig. 16 is a schematic side view of a vertical takeoff and landing aircraft according to a seventh embodiment of the present invention.
[Fig. 17] Fig. 17 is a schematic plan view of a vertical takeoff and landing aircraft according to a ninth embodiment of the present invention.
[Fig. 18] (A) is a graph showing sound pressure fluctuations during rotation of the rotors, caused by different numbers of rotor blades, and (B) is a graph showing sound pressure fluctuations during rotation of the rotors in each of the first and eighth embodiments.
[Fig. 19] (A) and (B) are conceptual diagrams for describing a lift offset state of the rotor.

### Mode(s) for Carrying Out the Invention

Hereinafter, embodiments of the present invention will be described with reference to the drawings. In the following description, configurations previously described will be denoted by similar reference symbols, and description thereof will be omitted in some cases.

### <First Embodiment>

### [Overall Configuration of Vertical Takeoff And Landing Aircraft]

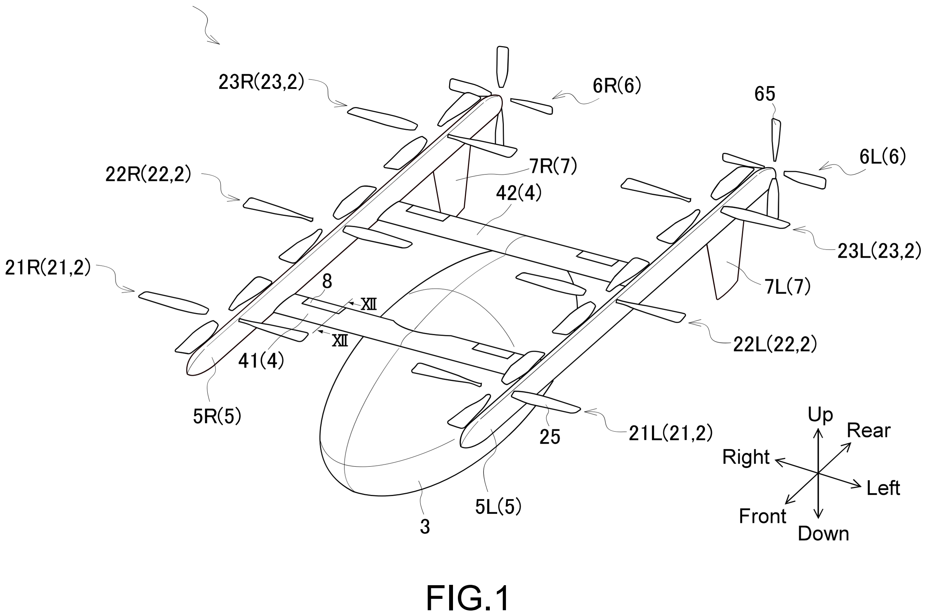

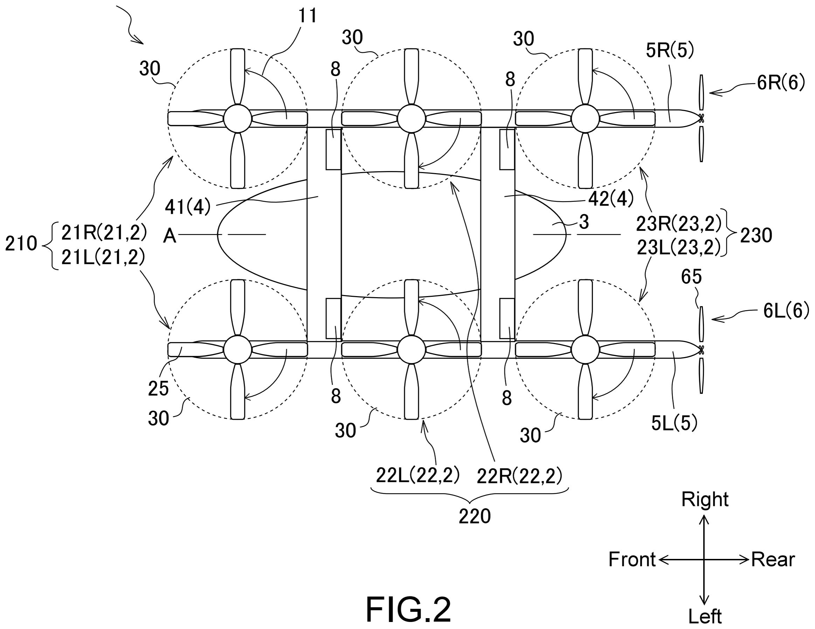

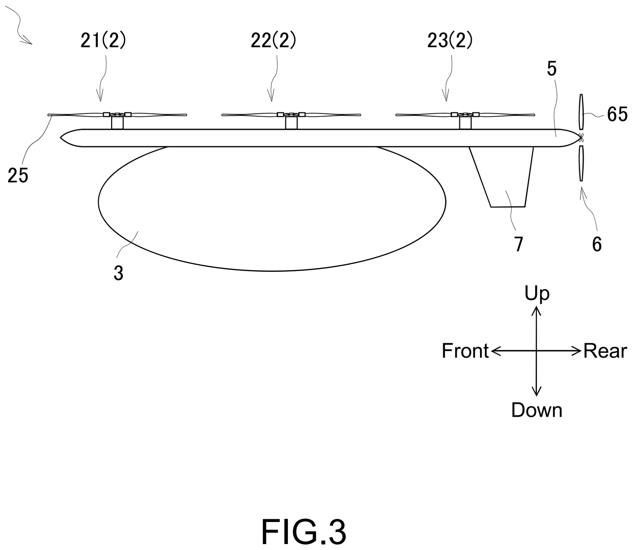

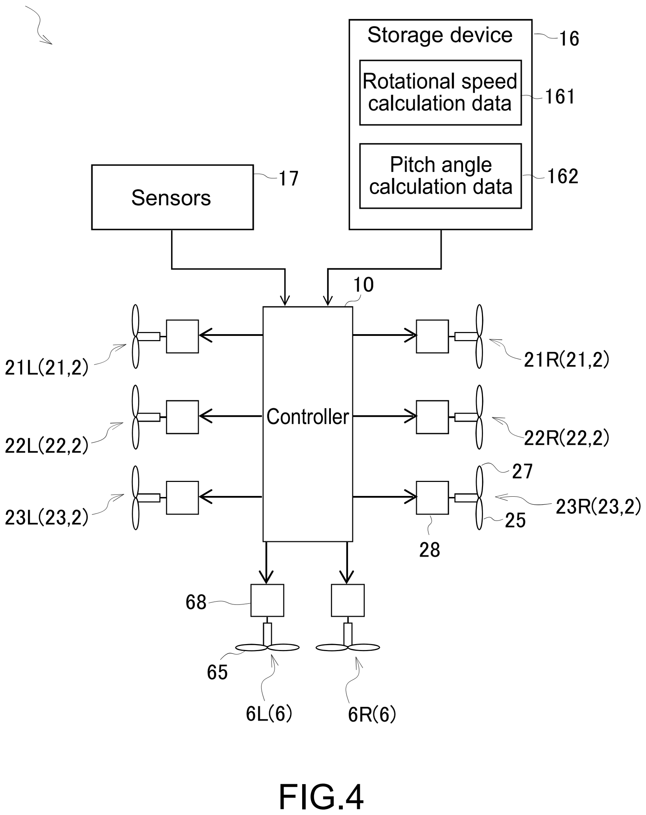

Fig. 1 is a schematic perspective view of a vertical takeoff and landing aircraft according to a first embodiment of the present invention. Fig. 2 is a schematic plan view of the vertical takeoff and landing aircraft according to the first embodiment. Fig. 3 is a schematic side view of the vertical takeoff and landing aircraft according to the first embodiment. Fig. 4 is a block diagram showing a configuration of a control system of rotors of the vertical takeoff and landing aircraft.

A vertical takeoff and landing aircraft 1 is a lift-and-cruise-type multi-rotor vertical takeoff and landing aircraft including a plurality of rotors for vertical climb and descent (hereinafter, simply referred to as "rotor(s)") and propulsion propellers.

In this specification, a moving direction in which the vertical takeoff and landing aircraft 1 moves in a horizontal direction (forward flight) is referred to as a front direction, and its opposite direction is referred to as a rear direction. In addition, as viewed from the vertical takeoff and landing aircraft 1 facing forward, a right-side direction in the width direction of the vertical takeoff and landing aircraft 1 is referred to as a right direction, and a left-side direction in the width direction is referred to as a left direction. Additionally, a vertically upward direction is referred to as an upward direction, a vertically downward direction is referred to as a downward direction. The front-rear direction, the right-left direction, and the up-down direction are orthogonal to each other. In addition, in this specification, the plan view of the vertical takeoff and landing aircraft 1 is referred to as a view when the vertical takeoff and landing aircraft 1 is viewed from above. Additionally, "outward in the right-left direction" means the side distant from the vertical center line A (see Fig. 2) that bisects the vertical takeoff and landing aircraft 1 in the right-left direction (width direction) when viewed in plan view, and "inward in the right-left direction" means the side approaching the vertical center line A when viewed in plan view. Additionally, a "rotation direction" of the rotor 2 means the rotation direction when viewed in plan view.

As shown in Figs. 1 to 3, the vertical takeoff and landing aircraft 1 includes a fuselage 3, two fixed wings 4, a pair of right and left rod-shaped support members 5, a plurality of (in this embodiment, six) rotors 2, two propulsion propellers 6, and two vertical tails 7.

### [Configuration of Each Part of Vertical Takeoff And Landing Aircraft]

### (Fuselage)

The fuselage 3 has a long shape in the front-rear direction and a streamline shape that provides small drag during forward flight. The fuselage 3 may be provided with a cockpit. The vertical takeoff and landing aircraft 1 may be a manned aircraft or an unmanned aircraft controlled by an operator on the ground via wireless communication.

### (Fixed Wing)

The fixed wing 4 has a shape extending in the right-left direction and couples a pair of right and left rod-shaped support members 5R and 5L, which will be described lager, to each other. The two fixed wings 4 are respectively located on the front side and the rear side of the fuselage 3 and connected to the fuselage 3. The fixed wing 4 located on the front side is referred to as a front fixed wing 41, the fixed wing 4 located on the rear side is referred to as a rear fixed wing 42, and if there is no particular need to distinguish between both of them, the fixed wings 4 are each referred to as a fixed wing 4. The fixed wing 4 generates part of the lift. A pair of right and left flight control surfaces 8 may be provided at a rear end of each fixed wing 4. The flight control surface 8 will be described later.

From the viewpoint of the stability of the aircraft, it is favorable to change the mounting angles of the front fixed wing 41 and the rear fixed wing 42. For example, the mounting angle of the rear fixed wing 42 may be set to be approximately one degree larger than that of the front fixed wing 41. This makes it possible to make the lift generated by the fixed wing 4 at the rear of the aircraft larger than at the front of the aircraft and generate a nose-down moment of the aircraft, which can contribute to improvement in the static stability of the aircraft. In addition, when the mounting angles of the front fixed wing 41 and the rear fixed wing 42 are set to be equal, the lift generated by the rear fixed wing 42 is reduced due to the downwash generated by the front fixed wing 41. However, if the mounting angle of the rear fixed wing 42 is made larger than that of the front fixed wing 41, the lift generated by the rear fixed wing 42 can be corrected and ensured.

### (Rod-Shaped Support Member)

The pair of right and left rod-shaped support members 5 have a shape extending in the front-rear direction and are provided on both the right and left sides of the fuselage 3 in plan view. In the pair of right and left rod-shaped support members 5, the rod-shaped support member located on the right side is denoted by 5R, and the rod-shaped support member located on the left side is denoted by 5L. If there is no particular need to distinguish between them, the right and left rod-shaped support members 5 are each referred to as a rod-shaped support member 5. In this specification, the rod-shaped support member 5 "extending in the front-rear direction" is not limited to the form in which the rod-shaped support member 5 extends parallel to the front-rear direction, but only needs to extend in the front-rear direction as a whole and may be curved like a rod-shaped support member 5A of a second embodiment to be described later. In this embodiment, the rod-shaped support member 5 may have a shape extending on a straight line parallel to the front-rear direction.

The right-side rod-shaped support member 5R is fixed to a right end side of the front fixed wing 41 and a right end side of the rear fixed wing 42. The left-side rod-shaped support member 5L is fixed to a left end side of the front fixed wing 41 and a left end side of the rear fixed wing 42. The rod-shaped support member 5 supports the rotors 2 at the top thereof, the vertical tail 7 on the lower rear thereof, and the propulsion propeller 6 at the rear thereof.

### (Rotor)

The pair of right and left rod-shaped support members 5R and 5L are each provided with two or more rotors 2 disposed in the front-rear direction. The "two or more rotors disposed in the front-rear direction" includes a form in which two or more rotors are disposed on the same straight line parallel to the front-rear direction as well as a form in which two or more rotors are disposed on a curved line extending in the front-rear direction. It suffices to provide two or more rotors in the front-rear direction as a whole.

In this embodiment, three rotors 2 are disposed on each rod-shaped support member 5, and six rotors 2 in total are disposed. The centers of the three rotors 2 disposed on each rod-shaped support member 5 are located on the same straight line parallel to the front-rear direction. The center of each rotor 2 is located at the same distance from the vertical center line A in the right-left direction and at the same position in the up-down direction. The rotors 2 are disposed on the same straight line in such a manner, so that the width (the dimension in the right-left direction) of the vertical takeoff and landing aircraft 1 can be reduced.

The rotors 2 are disposed in the same number on the top of each rod-shaped support member 5. The three rotors 2 disposed on the right-side rod-shaped support member 5R are referred to as a right-side first rotor 21R, a right-side second rotor 22R, and a right-side third rotor 23R sequentially from the front to the rear. The three rotors 2 disposed on the left-side rod-shaped support member 5L are referred to as a left-side first rotor 21L, a left-side second rotor 22L, and a left-side third rotor 23L sequentially from the front to the rear. If there is no particular need to distinguish between them, those rotors are each referred to as a rotor 2. The right-side first rotor 21R and the left-side first rotor 21L, the right-side second rotor 22R and the left-side second rotor 22L, and the right-side third rotor 23R and the left-side third rotor 23L respectively form pairs, in each of which the paired rotors are located at the same position in the front-rear direction. In other words, the vertical takeoff and landing aircraft 1 includes three rotor groups each including the pair of right and left rotors 2. A rotor group including the right-side first rotor 21R and the left-side first rotor 21L is referred to as a first rotor group 210, a rotor group including the right-side second rotor 22R and the left-side second rotor 22L is referred to as a second rotor group 220, and a rotor group including the right-side third rotor 23R and the left-side third rotor 23L is referred to as a third rotor group 230. If there is no need to distinguish between the two rotors 2 belonging to the first rotor group 210, like the right-side first rotor 21R and the left-side first rotor 21L, the two rotors 2 are each referred to as a first rotor 21. The same holds true for the second rotor group 220 and the third rotor group 230.

The rotor 2 is a rotor for vertical climb and descent. Each rotor 2 rotates in a predetermined direction to generate the lift (propulsive force in the upward direction) for vertical climb, vertical descent, and hovering (stopping in mid-air). Further, each rotor 2 does not stop rotating even during forward flight (during horizontal flight), and continues to rotate to generate the lift. In such a manner, in this embodiment and each embodiment to be described later, the rotor 2 takes a role of generating the lift during forward flight together with the fixed wings 4. In addition, the rotational speed of the rotor 2 and the pitch angle of a blade 25 are controlled individually for each rotor 2. The rotation direction of the rotor 2 is set in accordance with the arranged position of the rotor.

In this embodiment and each embodiment to be described later, the lift during forward flight is generated using the rotors, and thus there is no need to rely on the fixed wings for the whole lift of the aircraft, which makes it possible to reduce the span length (width) of the fixed wing and reduce the width size of the vertical takeoff and landing aircraft as a whole. In addition, as will be described later in detail, in this embodiment and each embodiment to be described later, the rotational speed of the rotor and the pitch angle of the blade are controlled using a relationship between an advance ratio (flight speed/blade tip speed) and an effective lift-to-drag ratio of the rotor, which makes it possible to suppress a reduction in rotor performance caused by flow field interference and improve the rotor performance. Improving the rotor performance makes it possible to reduce the proportion of the lift generated by the fixed wings in the whole lift of the aircraft and reduce the size of the fixed wings, and consequently the size of the vertical takeoff and landing aircraft. Note that a vertical takeoff and landing aircraft including fixed wings will be described as an example in this embodiment and each embodiment to be described later, but the present invention is also applicable to a vertical takeoff and landing aircraft without fixed wings. The fixed wings can be omitted by generating the lift during forward flight using the rotors only, and the size of the vertical takeoff and landing aircraft can be reduced.

In the two rotors adjacent to each other in the front-rear direction, during forward flight, the rear rotor is affected by a slightly downward slipstream (downwash) generated by the front rotor. This is referred to as flow field interference. In general, the rear rotor needs to increase the rotor rotational power to generate the lift necessary for that rotor due to the flow field interference, which reduces the performance of the rear rotor.

In contrast, in the vertical takeoff and landing aircraft according to this embodiment and each embodiment to be described later, during forward flight, the rotor is rotated in a predetermined direction, and the rotational speed of the rotor and the pitch angle of the blade are controlled to obtain an advance ratio (flight speed/blade tip speed) at which the effective lift-to-drag ratio of the rotor is a threshold or more. This makes it possible to minimize a reduction in rotor performance due to the flow field interference while generating the lift necessary for the rotor 2. This will be described later in detail.

As shown in Figs. 3 and 4, each rotor 2 includes a motor 28, a hub (not shown) connected to the output shaft of the motor 28, and a plurality of blades 25 attached to the hub. The motor 28 is a power source for rotating the rotor 2. The motor 28, a battery (not shown) that supplies power to the motor 28, and a controller 10 are provided to the fuselage 3.

Each rotor 2 includes four blades 25. A rotating surface 30 of each rotor 2 is horizontal. One end of the blade 25 in the longitudinal direction is attached to the hub. Another end of the blade 25 in the longitudinal direction is the tip of the blade 25 and is referred to as a blade tip 27. Each rotor 2 is configured such that the rotational speed is variable and the pitch angle of the blade 25 is variable. The pitch angle of the blade 25 is the angle of the blade surface with respect to the rotation axis of the rotor 2. Note that the number of blades is not limited to four, and it only needs to be two or more.

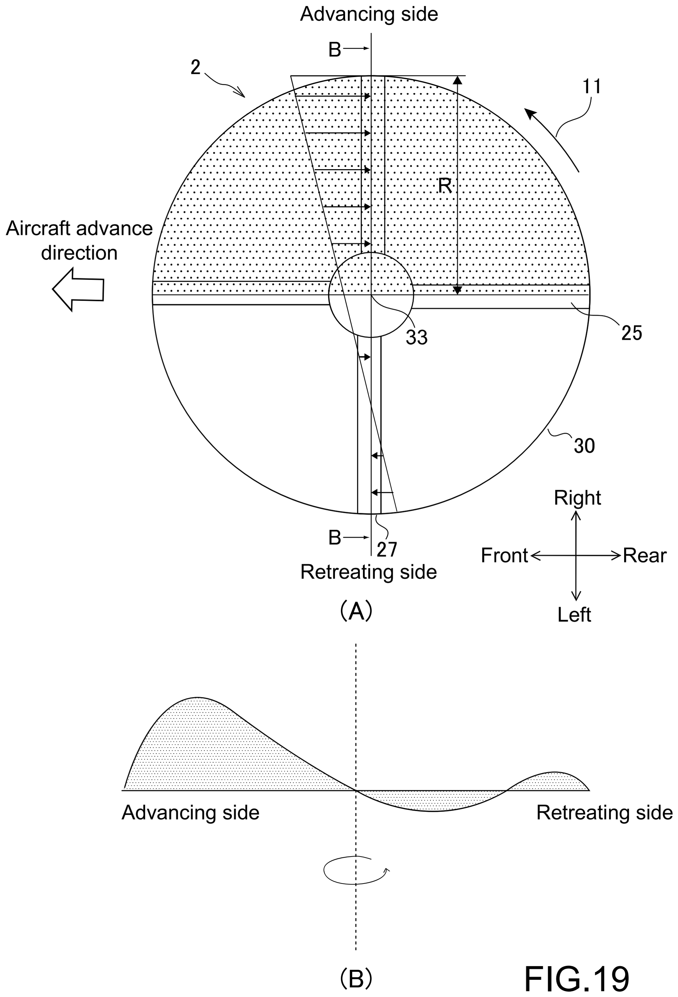

Here, a lift distribution on the rotating surface 30 of the rotor 2 will be described using (A) and (B) of Fig. 19. (A) of Fig. 19 is a plan view of the rotor 2 and shows a case where a rotation direction 11 is counterclockwise. (B) of Fig. 19 shows a conceptual lift distribution on the rotating surface 30 of the rotor 2 when the vertical takeoff and landing aircraft 1 is viewed from the front of the vertical takeoff and landing aircraft 1 during forward flight, along the line B-B in (A) of Fig. 19. Reference numeral 33 represents the center of the rotating surface 20.

In the rotor 2 shown in (A) of Fig. 19, the region filled with fine dots in the right half of the rotating surface 30 is the region in which the blade 25 rotates in the advancing direction (aircraft front direction) and is referred to as a "advancing side". The plain region in the left half of the rotating surface 30 is the region in which the blade 25 rotates in the retreating direction (aircraft rear direction) and is referred to as a "retreating side". Note that in the rotor that rotates clockwise, the right half of the rotating surface is the retreating side, and the left half is the advancing side.

Each rotor 2 provided in the vertical takeoff and landing aircraft 1 during forward flight has different relative speeds on the blade 25 on the right and left of each rotor 2. On the advancing side, a horizontal flight speed (V) and a rotational speed (rΩ) in a rotor radial direction r are combined with each other, and thus the relative speed on the blade is increased. In contrast, on the retreating side, the horizontal flight speed (V) and the rotational speed (rQ) are canceled out, and thus the relative speed is lowered. Thus, as shown in (B) of Fig. 19, generally, in the rotor 2, the generated lift is larger on the advancing side and smaller on the retreating side, the lift distribution has a gap as viewed as a whole of the rotating surface 30, and the action of point of the lift is shifted from the center (lift offset state). Note that in this specification, the "horizontal flight speed" is simply referred to as "flight speed" in some cases.

### (Propulsion Propeller)

As shown in Figs. 1 to 3, the propulsion propellers 6 are respectively disposed at the rear of the pair of right and left rod-shaped support members 5R and 5L. A propulsion propeller 6 disposed on the right-side rod-shaped support member 5R is referred to as a right-side propulsion propeller 6R, a propulsion propeller 6 disposed on the left-side rod-shaped support member 5L is referred to as a left-side propulsion propeller 6L, and if there is no need to distinguish between them, the two propulsion propellers are each referred to as a propulsion propeller 6. The right-side first rotor 21R, the right-side second rotor 22R, the right-side third rotor 23R, and the right-side propulsion propeller 6R are located on the straight line parallel to the front-rear direction in plan view. The left-side first rotor 21L, the left-side second rotor 22L, the left-side third rotor 23L, and the left-side propulsion propeller 6L are located on the straight line parallel to the front-rear direction in plan view.

As shown in Figs. 1 and 4, each propulsion propeller 6 includes a motor 68, a hub (not shown) connected to the output shaft of the motor 68, and a plurality of blades 65 attached to the hub. The motor 68 is a power source for rotating the propulsion propeller 6. The motor 68 and a battery (not shown) that supplies power to the motor 68 are provided to the fuselage 3. Note that the position for mounting the battery is not necessarily limited to the inside of the fuselage. For example, from the viewpoint of the weight of power wiring, the battery may be disposed as close to the individual motor as possible. In addition, batteries may also be distributed inside the support members or under the support members. In this embodiment, each propulsion propeller 6 include four blades 65. The rotating surface of each propulsion propeller 6 is vertical. The propulsion propeller 6 generates forward propulsive force by the rotation of the blades 65, enabling the vertical takeoff and landing aircraft 1 to move forward (forward flight).

In the vertical takeoff and landing aircraft according to this embodiment and each embodiment to be described later, propulsive force is generated by the propulsion propellers 6, and lift is generated by the plurality of rotors 2 and the fixed wings 4, thus allowing speed-up.

### (Vertical Tail)

The vertical tails 7 are respectively disposed while being coupled to the lower rear of the pair of right and left rod-shaped support members 5R and 5L. A vertical tail 7 coupled to the right-side rod-shaped support member 5R and extending downward is referred to as a right-side vertical tail 7R, and a vertical tail 7 coupled to the left-side rod-shaped support member 5L and extending downward is referred to as a left-side vertical tail 7L. If there is no particular need to distinguish between them, the vertical tails 7 are each referred to as a vertical tail 7. The vertical tail 7 takes a role of maintaining the stability of the vertical takeoff and landing aircraft 1 in the right-left direction. The vertical tail may be provided on the top of the rod-shaped support member 5 while extending upward.

### [Configuration of Control System]

As shown in Fig. 4, the vertical takeoff and landing aircraft 1 includes the controller 10 that controls the rotors 2 and the propulsion propellers 6, a storage device 16, and sensors 17.

### (Sensors)

The sensors 17 include various sensors that detect a flight state of the vertical takeoff and landing aircraft 1. The sensors 17 include, for example, a gyro sensor that detects the angle of the aircraft, an acceleration sensor that detects the acceleration of the aircraft, an airspeed indicator, and a GPS. The attitude angles (pitch, roll, and yaw), flight speed, position, and the like of the aircraft are detected from the sensing results of the sensors 17. The sensing results information from the sensors 17 are output to the controller 10.

### (Controller)

The vertical takeoff and landing aircraft 1 is basically controlled in any one of an climb/descent mode, a forward flight mode, and a hovering mode. The climb/descent mode is a control mode when the vertical takeoff and landing aircraft 1 vertically ascends or vertically descends. The vertical takeoff and landing aircraft 1 vertically ascends during takeoff and vertically descends during landing. The forward flight mode is a control mode during forward flight while maintaining the aircraft at a horizontal attitude. The forward flight mode further has a rotational speed maintaining mode in which the rotational speed of the rotor is controlled at a constant speed and a rotational speed changing mode in which the rotational speed of the rotor can be changed. The hovering mode is a control mode during hovering. Note that this embodiment describes an example in which the aircraft climbs or descends vertically, but the aircraft may also climb or descend obliquely as in a fixed-wing aircraft.

The aircraft vertically ascends (or obliquely ascends) in the climb/descent mode, and when it reaches a certain altitude, the propulsion propellers 6 operate and the aircraft transitions to the forward flight mode. In the forward flight mode, the aircraft flies in the rotational speed maintaining mode in which the rotational speed of the rotor is constant until the flight speed reaches a predetermined flight speed (in this embodiment, 100 km/h (approximately 28 m/s)), and when it reaches a predetermined flight speed (in this embodiment, 100 km/h) or higher, the aircraft transitions to the rotational speed changing mode, and the rotational speed of the rotor and the pitch angle of the blade according to the present invention are controlled. In the landing configuration, the aircraft reduces its flight speed in the forward flight mode, and when the flight speed becomes less than the predetermined flight speed, it changes from the rotational speed changing mode to the rotational speed maintaining mode and further gradually reduces its flight speed. The aircraft then transitions to the climb/descent mode, vertically descends, and lands. The rotational speed of the rotor in the rotational speed changing mode of the forward flight mode is controlled to be smaller than the rotational speed of the rotor in the climb/descent mode and the rotational speed maintaining mode of the forward flight mode.

The controller 10 controls the rotors 2 and the propulsion propellers 6 individually in accordance with each mode. The controller 10 controls the rotational speed of the propulsion propeller 6, and the like, and controls the flight speed of the vertical takeoff and landing aircraft 1, and the like. The controller 10 controls the rotational speed of the rotor 2 and the pitch angle of the blade 25.

In the forward flight mode, the controller 10 rotates the rotor 2 in a rotation direction corresponding to the arrangement position thereof during forward flight at a flight speed of 100 km/h or higher, and uses the flight speed information to control the rotational speed of the rotor 2 and the pitch angle of the blade 25 to obtain an advance ratio (flight speed/blade tip speed) at which the effective lift-to-drag ratio of the rotor is a threshold or more.

Specifically, the controller 10 uses the flight speed information to calculate a range of the rotational speed of the rotor so as to obtain an advance ratio at which the effective lift-to-drag ratio of the rotor is a threshold or more, on the basis of first data prepared in advance that indicates the relationship between the effective lift-to-drag ratio of the rotor and the advance ratio (flight speed/blade tip speed). The controller 10 then uses the flight speed information to calculate a range of the pitch angle of the blade to generate the lift necessary for the rotor within the calculated range of the rotational speed of the rotor. Subsequently, the controller 10 then determines the rotational speed of each rotor and the pitch angle of the blade within the calculated ranges of the rotational speed of the rotor and the pitch angle of the blade, and controls the rotor 2 on the basis of the determined rotational speed of the rotor 2 and the determined pitch angle of the blade 25.

In the calculation of the range of the rotational speed of the rotor and the range of the pitch angle of the blade, and in the determination of the rotational speed of the rotor and the pitch angle of the blade, the data stored in the storage device 16 to be described later is used.

During forward flight, the lift generated by each rotor 2 is controlled such that the aircraft takes a horizontal attitude. The controller 10 may determine the rotational speed of the rotor 2 and the pitch angle of the blade 25 so as to maintain the horizontal attitude while taking into consideration the attitude information of the vertical takeoff and landing aircraft 1 in addition to the data stored in the storage device 16.

The flight speed information and the attitude information of the vertical takeoff and landing aircraft 1 can be acquired using the sensing results of the sensors 17. The flight speed information and the attitude information are acquired in real time.

Further, in the forward flight mode, the controller 10 controls the rotation direction of each rotor in the rotation direction corresponding to the arrangement position of the rotor 2. The rotation direction of each rotor is determined so as to reduce the flow field interference in accordance with a downwash distribution generated by a rotor located in front of it.

### (Storage Device)

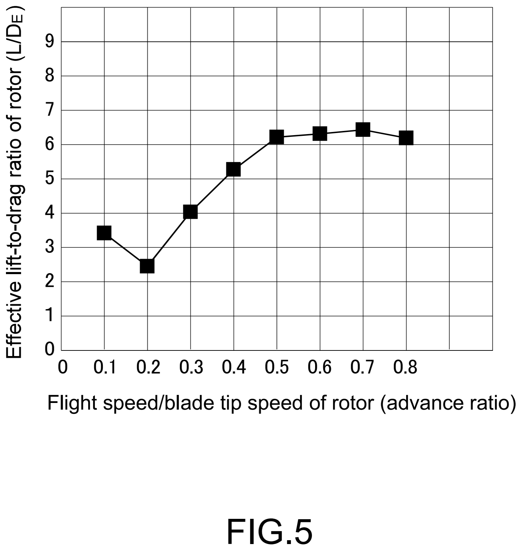

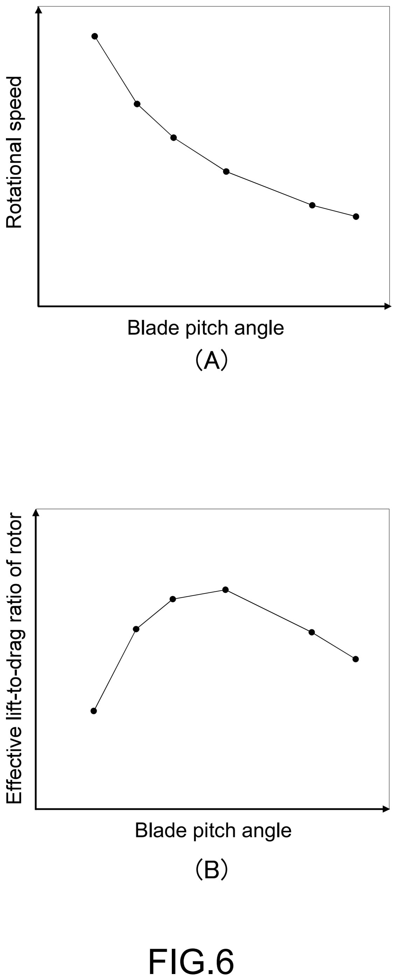

Figs. 5 and 6 are examples of data stored in the storage device 16 used to control the rotor 2. As shown in Fig. 4, the storage device 16 stores rotational speed calculation data 161 as first data, and pitch angle calculation data 162 as second data. Fig. 5 shows the rotational speed calculation data 161. (A) and (B) of Fig. 6 show conceptual pitch angle calculation data 162. The rotational speed calculation data 161 and the pitch angle calculation data 162 are prepared in advance and stored in the storage device 16.

### ((Rotational Speed Calculation Data))

The rotational speed calculation data 161 as first data is used to calculate the range of the rotational speed of the rotor for minimizing a reduction in aerodynamic performance due to the flow field interference. The rotational speed calculation data 161 shows the relationship between the advance ratio and the effective lift-to-drag ratio of the rotor.

The inventors of the present invention have found a correlation between the effective lift-to-drag ratio of the rotor and the advance ratio, in which when the advance ratio (flight speed/blade tip speed of rotor) is a predetermined value (0.5) or more, the effective lift-to-drag ratio of the rotor is stabilized at a threshold or more, as indicated by the rotational speed calculation data 161 shown in Fig. 5, during the forward flight in which the flight speed of the vertical takeoff and landing aircraft 1 including the plurality of rotors 2 for vertical climb and descent and the propulsion propellers 6 is 100 km/h or higher.

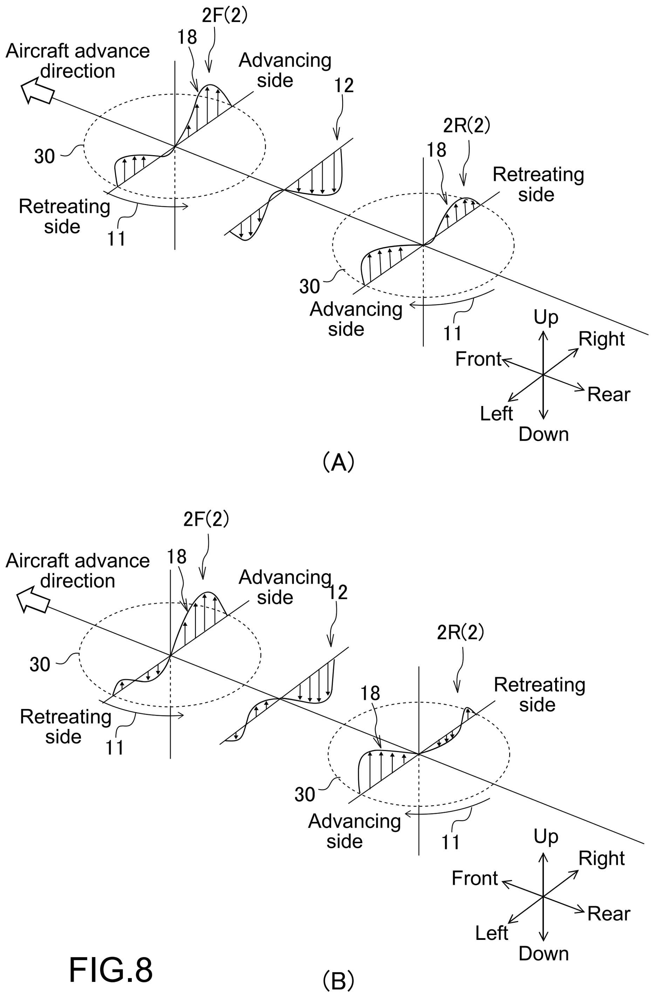

The flight speed information is used to control the rotational speed of the rotor on the basis of the rotational speed calculation data 161, which makes it possible to adjust the distribution of the lift generated on the rotating surface 30 of the rotor 2 (lift distribution) and consequently adjust the downwash distribution. The rotor 2 is controlled at the rotational speed of the rotor that provides the advance ratio (0.5 or more) at which the effective lift-to-drag ratio of the rotor is a threshold or more, which makes it possible to adjust the lift distribution (denoted by reference numeral 18 in Fig. 8) such that larger lift is generated on the advancing side and no lift is generated or a similar situation is caused on the retreating side on the rotating surface 30 of the rotor 2, and consequently adjust the downwash distribution (denoted by reference numeral 12 in Fig. 8). The rotation direction of the rotor is controlled in consideration of the downwash distribution and the arrangement position of the rotor, which makes it possible to suppress a reduction in rotor performance due to the flow field interference and minimize a reduction in aerodynamic performance.

As shown in Fig. 5, the rotational speed calculation data 161 is data of the effective lift-to-drag ratio (L/D_{E}) of the rotor 2 relative to the advance ratio (µ). The advance ratio (µ) is expressed as a ratio of the horizontal flight speed (V) divided by a blade tip speed RΩ (where R represents a rotor radius and Ω represents rotational speed). The blade tip speed is the speed of the blade tip 27 corresponding to the tip of the blade 25.

The effective lift-to-drag ratio (L/D_{E}) of the rotor 2 is a ratio of lift L and effective drag D_{E}. The effective lift-to-drag ratio of the rotor 2 is an indicator of the rotor performance. As the value of the effective lift-to-drag ratio becomes larger, drag becomes smaller, which indicates higher energy efficiency and better rotor performance. The effective drag D_{E} is defined as follows.

D_{E}=P/V-X=P/V+D (where P represents rotor rotational power, V represents horizontal flight speed, X represents propulsive force, and D represents drag.)

As indicated by the rotational speed calculation data 161 in Fig. 5, in the range of 0.2 or more in the advance ratio (flight speed/blade tip speed of rotor), as the value of the advance ratio becomes larger, the value of the effective lift-to-drag ratio tends to increase. Further, if the advance ratio is 0.5 or more, the effective lift-to-drag ratio of the rotor is stabilized roughly in the range of 6.0 to 6.5. In other words, if the rotor 2 is controlled at the rotational speed of the rotor that provides the advance ratio (0.5 or more) at which the effective lift-to-drag ratio of the rotor is a threshold or more (in the example shown in Fig. 5, the threshold is 6.0), the changes in rotor performance are reduced, and the rotor performance is stabilized in a good state. The fact that the advance ratio is increased with respect to a certain flight speed means that the rotational speed of the rotor is reduced. If the rotational speed is reduced, the effective lift-to-drag ratio of the rotor can be increased.

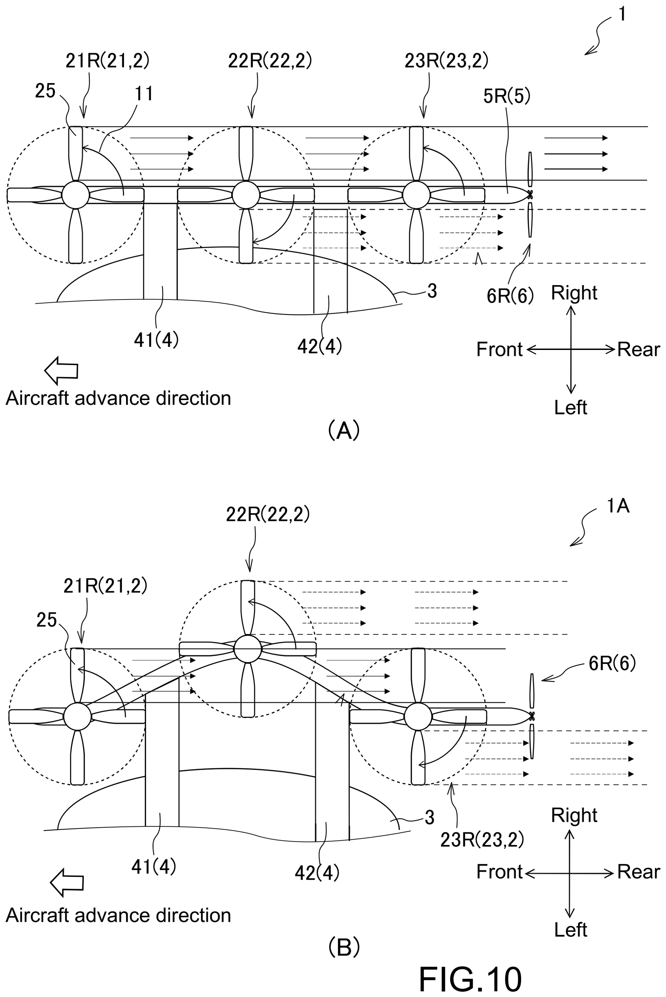

Here, the "threshold" in "the effective lift-to-drag ratio of the rotor is a threshold or more" is a value when the effective lift-to-drag ratio of the rotor starts to be stabilized, and in the example shown in Fig. 5, the threshold is 6.0. Note that the threshold can change depending on the arrangement position of the rotor 2. For example, if the rotors are disposed on the same straight line as in this embodiment, in the first rotor 21 and the second rotor 22 and in the third rotor 23, the threshold of the effective lift-to-drag ratio of the rotor is lower in the third rotor 23, whereas the graph showing the correlation between the advance ratio and the effective lift-to-drag ratio of the rotor (see Fig. 5) has a similar shape, and how to change is the same. In any rotor, when the advance ratio is 0.5 or more, the effective lift-to-drag ratio of the rotor is a threshold or more, that is, the rotor performance is stabilized. Note that the reason why the threshold of the effective lift-to-drag ratio is reduced in the third rotor 23 is that the third rotor 23 is affected by the downwash of the first rotor 21 and the second rotor 22 as shown in (A) of Fig. 10.

The range of the rotational speed of each rotor 2 can be calculated using the same rotational speed calculation data 161, but the storage device 16 may store different rotational speed calculation data 161 for the first rotor 21 and the second rotor 22 and for the third rotor 23, for example.

### ((Pitch Angle Calculation Data))

The pitch angle calculation data 162 as second data is used to calculate the range of the pitch angle of the blade 25 and determine the rotational speed of the rotor 2 and the pitch angle of the blade 25. The pitch angle calculation data 162 is data showing a relationship between the rotational speed of the rotor 2, the pitch angle of the blade 25, and the effective lift-to-drag ratio of the rotor 2.

The controller 10 uses the flight speed information to calculate, on the basis of the pitch angle calculation data 162, the range of the pitch angle of the blade 25 that generates the lift necessary for the rotor 2 within the range of the rotational speed of the rotor, which has been calculated using the rotational speed calculation data 161. The controller 10 then determines a rotational speed of the rotor 2 and a pitch angle of the blade 25 within the calculated range of the rotational speed of the rotor and the calculated range of the pitch angle so as to optimize the effective lift-to-drag ratio of the rotor.

The pitch angle calculation data 162 includes data showing a relationship between the blade pitch angle (the pitch angle of the blade) and the rotational speed of the rotor shown in (A) of Fig. 6, and data showing a relationship between the blade pitch angle and the effective lift-to-drag ratio of the rotor shown in (B) of Fig. 6. The horizontal axis representing the blade pitch angle in the data shown in (A) of Fig. 6 and the horizontal axis representing the blade pitch in the data shown in (B) of Fig. 6 correspond to each other. (A) of Fig. 6 shows a relationship between the pitch angle and the rotational speed that can generate the same lift. For example, even if the rotational speed of the rotor is changed, when the pitch angle of the blade is changed in accordance with the rotational speed on the basis of (A) of Fig. 6, an adjustment to obtain the same lift can be performed. The data showing the relationship between the rotational speed of the rotor, the pitch angle of the blade, and the effective lift-to-drag ratio of the rotor (pitch angle calculation data 162) shown in (A) and (B) of Fig. 6 varies for each flight speed. The storage device 16 stores in advance the pitch angle calculation data 162 for each flight speed.

### (Details of Control by Controller)

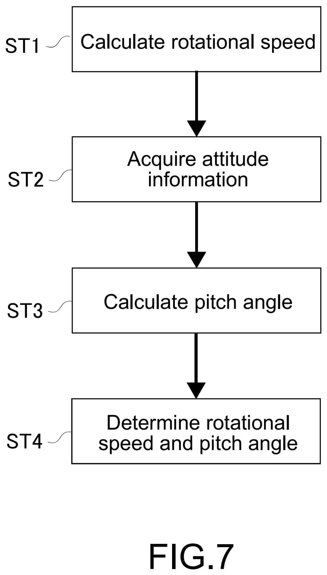

Hereinafter, how the rotation direction of the rotor 2 is controlled will be described using Fig. 2 and (A) of Fig. 10. Subsequently, the determination by the controller 10 on the rotational speed of the rotor 2 and the pitch angle of the blade 25 to be used to control the rotor 2 during the forward flight at a flight speed of a predetermined speed (100 km/h) or higher will be described using Figs. 5, 6, and 8 along with a control flow shown in Fig. 7.

(A) of Fig. 10 is a partial plan view of the right side of the vertical takeoff and landing aircraft 1 of this embodiment, for describing a relationship between the rotation direction and the flow field interference. Fig. 7 is a control flow chart by the controller 10. (A) and (B) of Fig. 8 are conceptual diagrams for describing the flow field interference of two rotors adjacent to each other one behind the other on the same straight line parallel to the front-rear direction, showing the lift distribution and the downwash distribution generated on the rotating surface of the rotor. In the description using (A) and (B) of Fig. 8, in the two rotors 2, the rotor located on the front side (hereinafter, referred to as a front rotor) is denoted by reference symbol 2F, and the rotor located on the rear side (hereinafter, referred to as a rear rotor) is denoted by reference symbol 2R.

(A) of Fig. 8 is a conceptual diagram of flow field interference of a multi-rotor aircraft without propulsion propellers, as a comparison example, showing a case where the control of the rotational speed of the rotor according to the present invention is not performed. In the multi-rotor aircraft, rotors are tilted forward during forward flight, and it is necessary to simultaneously generate lift and propulsive force by the rotors. For example, the advance ratio is approximately 0.2 to 0.4. (A) of Fig. 8 shows a conceptual diagram of flow field interference, for example, when the advance ratio is approximately 0.3 and the effective lift-to-drag ratio of the rotor is approximately 4.

(B) of Fig. 8 is a conceptual diagram of flow field interference, showing a case where the control of the rotational speed of the rotor according to the present invention is performed, in which the advance ratio is 0.5 and the effective lift-to-drag ratio of the rotor is approximately 6. The vertical takeoff and landing aircraft according to this embodiment and each embodiment to be described later includes the propulsion propellers 6 and has a form in which thrust during forward flight is obtained by the propulsion propellers 6 and the plurality of rotors 2 contribute to only the generation of lift. Hence, during forward flight at a flight speed of a predetermined speed or higher, the rotational speed of the rotor 2 can be changed to be lower, thereby increasing the advance ratio.

### (Control of Rotation Direction)

As shown in (A) of Fig. 10, if the centers of two rotors 2 adjacent to each other in the front-rear direction in plan view are located on the same straight line parallel to the front-rear direction, the controller 10 controls those two rotors 2 to rotate in the opposite rotation directions. In the vertical takeoff and landing aircraft 1, the two rotors 2 adjacent to each other in the front-rear direction are the right-side first rotor 21R and the right-side second rotor 22R, the right-side second rotor 22R and the right-side third rotor 23R, the left-side first rotor 21L and the left-side second rotor 22L, and the left-side second rotor 22L and the left-side third rotor 23L.

As shown in Fig. 2 and (A) of Fig. 10, the right-side first rotor 21R and the right-side third rotor 23R are controlled to rotate counterclockwise, and the right-side second rotor 22R is controlled to rotate clockwise. Similarly, the left-side first rotor 21L and the left-side third rotor 23L are controlled to rotate clockwise, and the left-side second rotor 22L is controlled to rotate counterclockwise.

The rotation directions of the rotors are determined in accordance with the arrangement positions of the rotors such that the advancing side (left half) of the right-side second rotor 22R is located just behind the retreating side (left half) of the right-side first rotor 21R, and the advancing side (right half) of the right-side third rotor 23R is located just behind the retreating side (right half) of the right-side second rotor 22R, in plan view of the vertical takeoff and landing aircraft 1. Similarly, the rotation directions of the rotors are determined in accordance with the arrangement positions of the rotors such that the advancing side (right half) of the left-side second rotor 22L is located just behind the retreating side (right half) of the left-side first rotor 21L, and the advancing side (left half) of the left-side third rotor 23L is located just behind the retreating side (left half) of the left-side second rotor 22L.

Note that the control of the rotation directions when the centers of two rotors 2 adjacent to each other in the front-rear direction are shifted in the right-left direction will be described in a second embodiment.

### (Determination on Rotational Speed of Rotor and Pitch Angle of Blade)

When the controller 10 enters the forward flight mode for forward flight at a flight speed of a predetermined speed (100 km/h) or higher, the controller 10 uses the flight speed information based on the sensing results acquired by the sensors 17 to calculate a range of the rotational speed of the rotor, in which the effective lift-to-drag ratio of the rotor is a threshold or more, on the basis of the rotational speed calculation data 161 shown in Fig. 5 (ST1). Specifically, the controller 10 uses the flight speed information to calculate a range of the rotational speed of the rotor 2 so as to obtain an advance ratio of 0.5 or more, at which the effective lift-to-drag ratio of the rotor is 6 or more, on the basis of the rotational speed calculation data 161 in the example shown in Fig. 5.

Controlling the rotor 2 at the rotational speed calculated as described above makes it possible to adjust, as shown in (B) of Fig. 8, the lift distribution to obtain a lift distribution 18 in which larger lift is generated on the advancing side and no lift is generated or a similar situation is caused on the retreating side on the rotating surface 30 of each rotor 2. Therefore, a downwash distribution 12 can also be adjusted such that larger downwash is generated behind the advancing side of the front rotor 2F, and no downwash is generated or a similar situation is caused behind the retreating side of the front rotor 2F.

In such a manner, the lift distribution and the downwash distribution of the rotating surfaces of the rotors are adjusted, and the rotation directions of the rotors are controlled as described above, and thus in the two rotors adjacent to each other in the front-rear direction, the advancing side of the rotating surface 30 of the rear rotor (e.g., right-side second rotor 22R) is located behind the retreating side of the rotating surface 30 of the front rotor (e.g., right-side first rotor 21R). Thus, in the rear rotor, the advancing side in which lift is mainly generated on its rotating surface, is less likely affected by the downwash of the front rotor, which can reduce the flow field interference.

Note that as shown in (A) of Fig. 10, the third rotor 23 is affected by the downwash of the first rotor 21 and the second rotor 22 located in front of the third rotor 23. However, when the rotation directions of the second rotor 22 and the third rotor 23 are set to be opposite to each other, the third rotor 23 is affected by the downwash of the first rotor 21 in the same rotation direction but is less affected by the downwash of the second rotor 22, which can reduce the flow field interference.

In such a manner, in the forward flight mode, the range of the rotational speed of the rotor in which the effective lift-to-drag ratio of the rotor is a threshold or more is obtained, and the rotation direction of each rotor is controlled in accordance with the arrangement position of the rotor. This eliminates the need to increase rotor rotational power of the rear rotor 2R in order to generate the necessary lift due to the influence of downwash, which makes it possible to suppress a reduction in rotor performance of the rear rotor 2R due to the flow field interference and minimize a reduction in aerodynamic performance.

In contrast, as shown in (A) of Fig. 8, in a comparison example in which the control of the rotational speed of the rotor according to this embodiment is not performed, for example, when the advance ratio is 0.3, large lift is likely to be generated also on the retreating side of the front rotor 2F. In the downwash distribution 12, large downwash is generated behind the retreating side of the front rotor 2F and this downwash largely affects the advancing side of the rear rotor 2R. This causes the need to increase the rotor rotational power of the rear rotor 2R in order to generate the lift necessary for the rear rotor 2R, resulting in reduction in rotor performance.

Next, the controller 10 acquires attitude information of the aircraft based on the sensing results of the sensors 17 (ST2).

The controller 10 then obtains the lift necessary for the aircraft to have a horizontal attitude for each of the rotors 2 on the basis of the attitude information, and calculates a range of the pitch angle of the blade 25 for obtaining the necessary lift (ST3). Specifically, the controller 10 uses the flight speed information to calculate, for each rotor 2, a range of the pitch angle of the blade, which corresponds to the range of the rotational speed of the rotor calculated in ST1, within the range in which the rotor 2 can obtain the necessary lift, on the basis of the data showing the relationship between the rotational speed and the blade pitch angle shown in (A) of Fig. 6.

Subsequently, the controller 10 determines, for each rotor 2, a pitch angle of the blade at which the effective lift-to-drag ratio of the rotor is increased within the calculated range of the pitch angle of the blade on the basis of the data shown in (B) of Fig. 6, and determines a rotational speed of the rotor in accordance with the determined pitch angle of the blade (ST4). Each rotor 2 is controlled at the determined rotational speed of the rotor and the determined pitch angle of the blade. The rotor 2 generates the necessary lift by the adjustment of the pitch angle of the blade, and is adjusted to reduce the drag of the rotor 2 at a lower rotational speed.

Here, when the rotational speed of the rotor and the pitch angle of the blade are determined, noise from the vibration derived from the rotor 2 may be generated when the rotational speeds of the rotors 2 are made equal. Hence, from the viewpoint of reducing the noise, the rotational speed of each rotor 2 may be shifted within the range of the rotational speed of the rotor 2 calculated in ST1 in a manner that sounds do not resonate.

Note that the control of the rotational speed of the rotor and the pitch angle of the blade using the rotational speed calculation data 161 and the pitch angle calculation data 162 is favorably used when the flight speed is 100 km/h or higher. If such control is performed when the flight speed is less than 100 km/h, it is difficult to generate sufficient lift by the rotors.

As described above, the vertical takeoff and landing aircraft includes the rotors that generate lift during forward flight and propulsion propellers, and suppresses a reduction in rotor performance due to the flow field interference and improves the rotor performance, thus allowing downsizing and speed-up.

Note that a vertical takeoff and landing aircraft without the fixed wings 4 may also be used. As described above, controlling the rotational speed of the rotor and the pitch angle of the blade suppresses a reduction in rotor performance due to the flow field interference, thus allowing downsizing as in the present embodiment.

The vertical takeoff and landing aircraft according to this embodiment and each embodiment to be described later include the six rotors 2. This can improve redundancy and safety. Even if one rotor 2 fails, the remaining rotors 2 can continue to provide the lift generated by the rotors 2. If one rotor 2 fails, the rotor 2 paired with the rotor 2 that has failed may be stopped and the four rotors 2 may be used, or the remaining five rotors 2 may continue to rotate.

The vertical takeoff and landing aircraft according to this embodiment and each embodiment to be described later include the six rotors 2, but it suffices to provide four or more rotors 2, and provide a plurality of rotor groups each including a pair of two right and left rotors in the front-rear direction, to which the present invention can be applied.

Hereinafter, other embodiments will be described, and points different from those of the first embodiment will be mainly described. Similar configurations are denoted by similar reference symbols, and description thereof may be omitted. In the following embodiments as well, as in the first embodiment, the rotational speed of the rotor and the pitch angle of the blade are controlled using the relationship between the advance ratio and the effective lift-to-drag ratio of the rotor during forward flight at a flight speed of a predetermined speed or higher.

### <Second Embodiment>

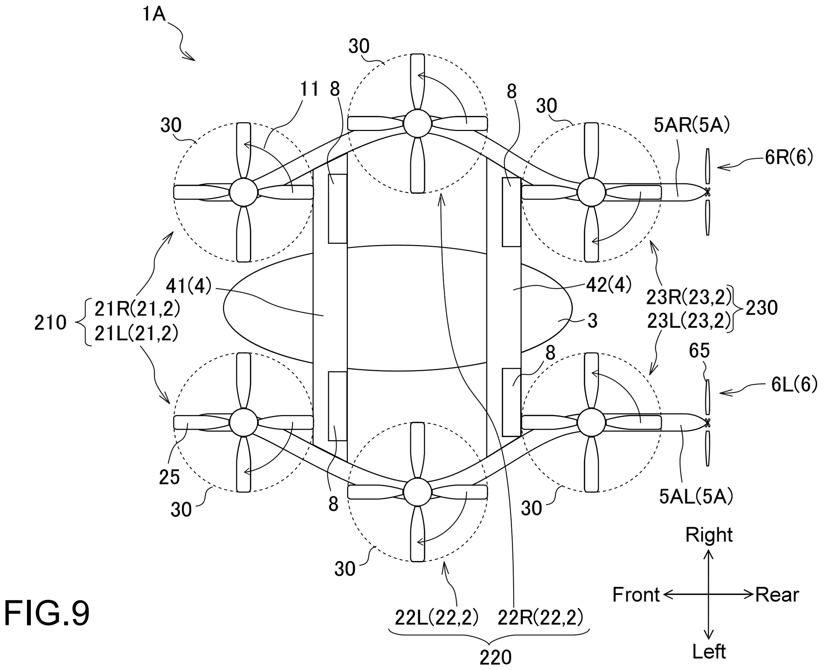

A vertical takeoff and landing aircraft 1A according to a second embodiment will be described using Fig. 9. Fig. 9 is a plan view of the vertical takeoff and landing aircraft 1A.

In the first embodiment, the rod-shaped support member 5 has a shape extending on a straight line parallel to the front-rear direction, but a pair of right and left rod-shaped support members 5A and 5B may have a curved shape extending in the front-rear direction and curved in plan view as in the vertical takeoff and landing aircraft 1A show in Fig. 9. A right-side rod-shaped support member 5AR and a left-side rod-shaped support member 5AL each have a curved shape in plan view, in which the center in the front-rear direction protrudes outward in the right-left direction.

The centers of three rotors supported by each of the pair of right and left rod-shaped support members 5AR and 5AL are arranged in the front-rear direction, and are not located on a straight line parallel to the front-rear direction but shifted in the right-left direction along a curved line. As shown in Fig. 9, in plan view, a right-side second rotor 22R is shifted outward in the right-left direction relative to a right-side first rotor 21R and a right-side third rotor 23R by a radius of the rotating surface 30. The right-side first rotor 21R and the right-side third rotor 23R are located at the same distance from the vertical center line A in the right-left direction. Similarly, a left-side second rotor 22L is shifted outward in the right-left direction relative to a left-side first rotor 21L and a left-side third rotor 23L by the radius of the rotating surface 30. The left-side first rotor 21L and the left-side third rotor 23L are located at the same distance from the vertical center line A in the right-left direction. In this embodiment, similarly to the first embodiment, the right-side first rotor 21R and the left-side first rotor 21L, the right-side second rotor 22R and the left-side second rotor 22L, and the right-side third rotor 23R and the left-side third rotor 23L form respective pairs to form a first rotor group 210, a second rotor group 220, and a third rotor group 230, respectively. The six rotors 2 are located at the same position in the up-down direction.

The rotation direction of each of the six rotors 2 will be described. As in this embodiment, when the centers of the two rotors 2 having the same height in the up-down direction and adjacent to each other in the front-rear direction are shifted in the right-left direction by the radius of the rotating surface 30 of the rotor, the rotation directions of the rotors 2 are controlled to obtain the following forms (1) and (2). In this embodiment, the two rotors 2 adjacent to each other in the front-rear direction are: the right-side first rotor 21R and the right-side second rotor 22R; the right-side second rotor 22R and the right-side third rotor 23R; the left-side first rotor 21L and the left-side second rotor 22L; and the left-side second rotor 22L and the left-side third rotor 23L. In the two rotors 2 adjacent to each other in the front-rear direction, a rotor located on the front side is referred to as a front rotor, and a rotor located on the rear side is referred to as a rear rotor.
(1) When a rear rotor is located outward in the right-left direction relative to a front rotor by the radius of the rotating surface, the front rotor is not located in front of the advancing side of the rotating surface 30 of the rear rotor, the retreating side of the rotating surface 30 of the rear rotor is located behind the advancing side of the rotating surface 30 of the front rotor, and control is performed such that the rotation directions of the front rotor and the rear rotors are made equal. By such control, the rear rotor is less affected by the downwash caused by the front rotor on the advancing side of the rear rotor in which lift is generated mainly on the rotating surface 30 thereof.
(2) When a rear rotor is located inward in the right-left direction relative to a front rotor by the radius of the rotating surface, the front rotor is not located just in front of the advancing side of the rotating surface 30 of the rear rotor, the retreating side of the rotating surface 30 of the rear rotor is located behind the retreating side of the rotating surface 30 of the front rotor, and control is performed such that the rotation directions of the front rotor and the rear rotors are set to be opposite to each other. By such control, the rear rotor is less affected by the downwash caused by the front rotor on the advancing side of the rear rotor in which lift is generated mainly on the rotating surface 30 thereof.

In this embodiment, as shown in Fig. 9, the right-side first rotor 21R and the right-side second rotor 22R rotate in the counterclockwise direction, and the right-side third rotor 23R rotates in the clockwise direction. The left-side first rotor 21L and the left-side second rotor 22L are controlled to rotate in the clockwise direction, and the left-side third rotor 23L is controlled to rotate in the counterclockwise direction. The rotation directions are controlled in such a manner, and thus each rotor is disposed in a manner that no rotor is located in front of the advancing side of the rotating surface of each rotor, or even if another rotor is located in front of it, the retreating side of the other rotor is located in front of the advancing side of the rotating surface of each rotor.

As shown in Fig. 9 and (B) of Fig. 10, the position relationship and rotation direction relationship between the right-side first rotor 21R and the right-side second rotor 22R and the position relationship and rotation direction relationship between the left-side first rotor 21L and the left-side second rotor 22L satisfy (1) described above. The rotation directions of the rotors are controlled in accordance with the arrangement positions of the rotors as described above, and thus the second rotor 22 (rear rotor) is less affected by the downwash caused by the first rotor 21 (front rotor) on the advancing side of the second rotor 22 (rear rotor) in which lift is generated mainly on the rotating surface 30 thereof.

As shown in Fig. 9 and (B) of Fig. 10, the position relationship and rotation direction relationship between the right-side second rotor 22R and the right-side third rotor 23R and the position relationship and rotation direction relationship between the left-side second rotor 22L and the left-side third rotor 23L satisfy (2) described above. The rotation directions of the rotors are controlled in accordance with the arrangement positions of the rotors as described above, and thus the third rotor 23 (rear rotor) is less affected by the downwash caused by the second rotor 22 (front rotor) on the advancing side of the third rotor 23 (rear rotor) in which lift is generated mainly on the rotating surface 30 thereof.

Further, as shown in Fig. 9 and (B) of Fig. 10, in the vertical takeoff and landing aircraft 1A, the rotation directions are controlled as described above, and thus the rotation directions of the right-side first rotor 21R and the right-side third rotor 23R are opposite to each other. The right-side first rotor 21R and the right-side third rotor 23R are disposed such that their centers are adjacent to each other on the same straight line parallel to the front-rear direction. In such arrangement, the right-side third rotor 23R is affected by the downwash of the right-side first rotor 21R. However, in this embodiment, the rotation directions are controlled such that the retreating side of the right-side first rotor 21R, in which lift is not generated or a similar situation is caused, is located in front of the advancing side of the right-side third rotor 23R, and thus the right-side third rotor 23R is less affected by the downwash of the right-side first rotor 21R. Therefore, the right-side third rotor 23R is less affected by the downwash of both the right-side first rotor 21R and the right-side second rotor 22R located in front of the right-side third rotor 23R. The same holds true for the left side.

In such a manner, in this embodiment, since some rotors are disposed outward in the right-left direction relative to the other rotors, the width size of the aircraft is increased more than that in the first embodiment, but every six rotors 2 can be disposed to avoid the flow field interference as described above, which can improve the rotor performance.

### <Third Embodiment>

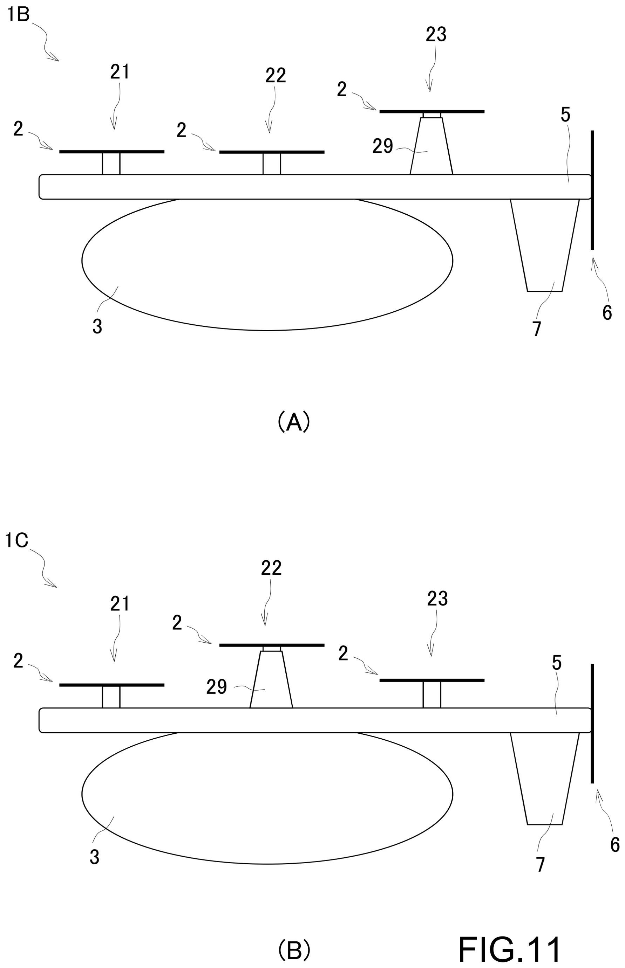

Vertical takeoff and landing aircrafts 1B and 1C according to a third embodiment will be described using Fig. 11. (A) of Fig. 11 is a schematic side view of the vertical takeoff and landing aircraft 1B, and (B) of Fig. 10 is schematic side view of the vertical takeoff and landing aircraft 1B. The vertical takeoff and landing aircrafts 1B and 1C each include, as in the first embodiment, a pair of right and left rod-shaped support members 5 having a straight line shape parallel to the front-rear direction, and three rotors that are provided to each of the rod-shaped support members 5 and located on the same straight line parallel to the front-rear direction in plan view.

In the first embodiment, the example in which the six rotors 2 are located at the same position in the up-down direction has been described, but as shown in (A) and (B) of Fig. 11, the position in the up-down direction may be different. In two rotors adjacent to each other in the front-rear direction, the height of a rear rotor is changed to be higher than that of a front rotor, which can reduce the influence of the flow field interference on the rear rotor due to the downwash of the front rotor and which does not limit the rotation direction of the rear rotor and thus expands the range of design. The rear rotor is disposed to be higher than the front rotor by about the radius of the rotating surface 30 of the rotor 2.

### [Vertical Takeoff And Landing Aircraft 1B]

In the vertical takeoff and landing aircraft 1B shown in (A) of Fig. 11, the first rotor 21 and the second rotor 22 are located at the same position in the up-down direction. The position of the third rotor 23 in the up-down direction is higher than those of the first rotor 21 and the second rotor 22. The height of the third rotor 23 may be adjusted by adding a structure 29 that changes a rotor height to the rod-shaped support member 5. If the structure 29 is added, it is favorable to provide a structure 29 having a streamline shape in order to avoid increasing the drag. As in the first embodiment, it is favorable to determine the rotation direction of each rotor 2 in consideration of the downwash distribution based on the conceptual diagram of the flow field interference of the front and rear rotors as shown in (B) of Fig. 8.

If the three rotors 2 disposed on each rod-shaped support member 5 are located on the same straight line parallel to the front-rear direction in plan view, and as shown in (A) of Fig. 11, the third rotor 23 is located higher than the first rotor 21 and the second rotor 22, the third rotor 23 located at the third position from the front is less affected by the downwash of the first rotor 21 and the second rotor 22 located in front of the third rotor 23. Further, if the rotation directions of the first rotor 21 and the second rotor 22, which are at the same position in the up-down direction and adjacent to each other one behind the other, are set to be opposite to each other as in the first rotor 21 and the second rotor 22 of the first embodiment, the second rotor 22 is less affected by the downwash of the first rotor 21.

As described above, the vertical takeoff and landing aircraft 1B has the form in which all the rotors avoid the flow field interference. Varying the positions of the rotors in the up-down direction as described above and controlling the rotation directions in accordance with the arrangement positions of the rotors makes it possible to reduce the flow field interference.

### [Vertical Takeoff And Landing Aircraft 1C]

In the vertical takeoff and landing aircraft 1C shown in (B) of Fig. 11, the first rotor 21 and the third rotor 23 are located at the same position in the up-down direction. The position of the second rotor 22 in the up-down direction is higher than those of the first rotor 21 and the third rotor 23. The rotor height of the second rotor 22 may be adjusted by adding a structure 29 that changes a rotor height to the rod-shaped support member 5.

If the three rotors 2 disposed on each rod-shaped support member 5 are located on the same straight line parallel to the front-rear direction in plan view, and as shown in (B) of Fig. 11, the second rotor 22 is located higher than the first rotor 21 and the third rotor 23, the rotation direction of the second rotor 22 is set to be the same as the rotation direction of the first rotor 21 and the rotation direction of the third rotor 23 is set to be opposite to the rotation direction of the second rotor 22 on each rod-shaped support member 5.

In the example shown in (B) of Fig. 11, the rotation directions of the right-side first rotor 21R and the right-side second rotor 22R are counterclockwise, the rotation direction of the right-side third rotor 23R is clockwise, the rotation directions of the left-side first rotor 21L and the left-side second rotor 22L are clockwise, and the rotation direction of the left-side third rotor 23L is counterclockwise.

Since the second rotor 22 is located higher than the first rotor 21, the second rotor 22 is less affected by the downwash caused by the first rotor 21.

Further, the rotation directions of the respective rotors 2 are set as described above, and thus the rotation directions of the second rotor 22 and the third rotor 23 are opposite to each other. In other words, the advancing side of the rotating surface 30 (left-side half of the rotating surface) of the right-side third rotor 23R is located behind the retreating side of the rotating surface (left-side half of the rotating surface) of the right-side second rotor 22R. Since the rotors are controlled to provide a lift distribution in which lift is not generated or a similar situation is caused on the retreating side, the downwash by the right-side second rotor 22R provides a downwash distribution in which downwash is not generated or a similar situation is caused behind the retreating side of the rotating surface 30 of the right-side second rotor 22R, and the right-side third rotor 23R is less affected by the downwash of the right-side second rotor 22R. The same holds true for the left side.

Besides, the rotation directions of the respective rotors 2 are set as described above, and thus the first rotor 21 and the third rotor 23, whose centers are located on the same straight line parallel to the front-rear direction and which are adjacent to each other one behind the other, have the same position in the up-down direction and the opposite rotation directions. In other words, the advancing side of the rotating surface 30 (left-side half of the rotating surface) of the right-side third rotor 23R is located behind the retreating side of the rotating surface (left-side half of the rotating surface) of the right-side first rotor 21R. Since the rotors are controlled to provide a lift distribution in which lift is not generated or a similar situation is caused on the retreating side, the downwash by the right-side first rotor 21R provides a downwash distribution in which downwash is not generated or a similar situation is caused behind the retreating side of the rotating surface 30 of the right-side first rotor 21R, and the right-side third rotor 23R is less affected by the downwash of the right-side first rotor 21R. Therefore, the right-side third rotor 23R is less affected by the downwash of the right-side first rotor 21R and the right-side second rotor 22R that are located in front of the right-side third rotor 23R. The same holds true for the left side.

As described above, the vertical takeoff and landing aircraft 1C has the form in which all the rotors avoid the flow field interference. Varying the positions of the rotors in the up-down direction as described above and controlling the rotation directions in accordance with the arrangement positions of the rotors makes it possible to reduce the flow field interference.

### <Fourth Embodiment>

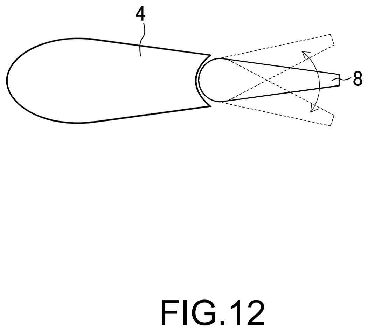

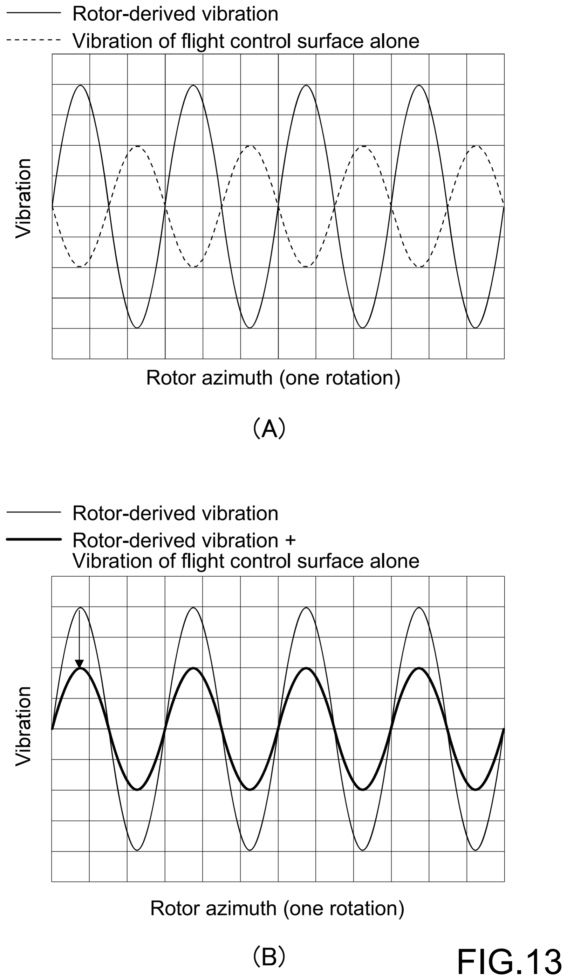

Fig. 12 is a schematic cross-sectional view of the fixed wing 4 provided with the flight control surface 8, taken along the line XII-XII of Fig. 1. (A) of Fig. 13 is a conceptual diagram showing rotor-derived vibration (indicated by the thin solid line) and vibration of the flight control surface alone (indicated by the dashed line). (B) of Fig. 13 is a conceptual diagram showing rotor-derived vibration (indicated by the thin solid line) and vibration obtained by combining the rotor-derived vibration and harmonic vibration caused by the flight control surface (indicated by the thick solid line). In (A) and (B) of Fig. 13, each vibration corresponds to the fluctuation of the lift generated by the fixed wing 4.

The vibration derived from the rotor 2 is generated due to the lift distribution in which large lift is generated on the advancing side on the rotating surface 30 of the rotor 2, which is a cause of the vibration of the aircraft. As shown in Fig. 12, in this embodiment and other embodiments, the flight control surface 8 may be configured to be movable in the up-down direction to produce harmonic vibration in the opposite phase of the vibration derived from the rotor 2. As shown in (A) of Fig. 13, the vibration in the opposite phase of the vibration derived from the rotor 2 is generated by the flight control surface 8, so that the vibration of the aircraft can be reduced as indicated by the thick line shown in (B) of Fig. 13. The flight control surface 8 is moved faster than the rotational speed of the rotor 2. The harmonic vibration of the flight control surface 8 is controlled at integer multiples of the frequency of the rotational speed of the rotor 2, and harmonic control is performed to shift the phase of the frequency of the rotor-derived vibration.

In such a manner, providing the flight control surface 8 that generates harmonic vibration in the opposite phase of the vibration derived from the rotor 2 makes it possible to reduce the vibration of the aircraft. This reduces the load on the aircraft and improves the durability and safety of the aircraft. In addition, this can reduce the risk of failures or malfunctions of various devices such as sensors mounted on the vertical takeoff and landing aircraft. Additionally, this can reduce noise and improve passenger comfort.

### <Fifth Embodiment>

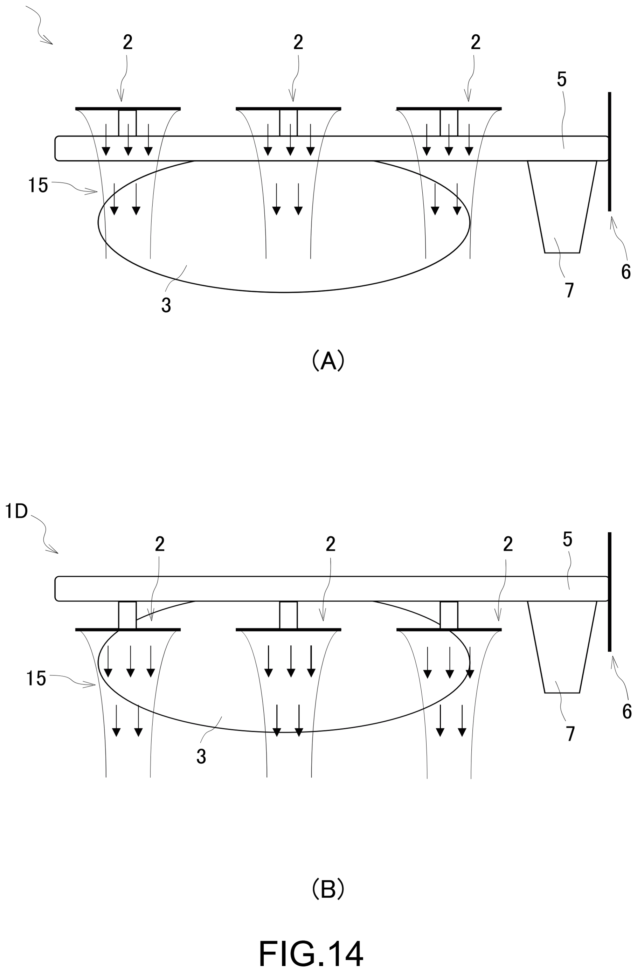

(A) of Fig. 14 is a schematic side view of the vertical takeoff and landing aircraft 1 according to the first embodiment, and (B) of Fig. 14 is a schematic side view of a vertical takeoff and landing aircraft 1D according to a fifth embodiment.

In each of the embodiments described above, the example in which the rotors 2 are disposed on the top of the rod-shaped support member 5 has been described as shown in (A) of Fig. 14, but the rotors 2 may be disposed on the bottom of the rod-shaped support member 5 as in the vertical takeoff and landing aircraft 1D shown in (B) of Fig. 14. If the rotors 2 are disposed on the top of the rod-shaped support member 5 as in the vertical takeoff and landing aircraft 1 shown in (A) of Fig. 14, when lift is generated by the rotors 2 during takeoff and landing (during vertical climb and during vertical descent) or during hovering, downwash is generated to the downward side of the rotors 2. Such downwash causes the flow field interference together with the rod-shaped support member 5, and the rod-shaped support member 5 generates a downward force of the aircraft in the direction opposite to the rotor lift. This is referred to as download. The download causes a need to generate further larger lift by the rotors 2, and the download is a cause of deterioration in vertical takeoff and landing performance or in rotor performance during hovering.

In order to avoid the download, as shown in (B) of Fig. 14, the rotors 2 may be disposed on the bottom of the rod-shaped support member 5. With such a configuration, the downwash caused by the rotors 2 does not cause the flow field interference with the rod-shaped support member 5, which can avoid the generation of the download. This can improve the rotor performance. Note that the rotor performance is not affected during forward flight even if the rotors 2 are located on the top or bottom of the rod-shaped support member 5.

In the case of a manned aircraft, as shown in (A) of Fig. 14, it is favorable to provide the rotors 2 to the top of the rod-shaped support member 5. This makes it difficult for passengers boarding the vertical takeoff and landing aircraft 1 to see the rotors 2 through the windows provided to the fuselage 3, thereby eliminating the psychological anxiety caused by the visibility of the rotors, such as the fear that the rotors will scatter and come flying, and providing a sense of visual security to the passengers. In addition, providing the rotors 2 to the top of the rod-shaped support member 5 makes it easy to avoid contact between the rotor 2 and people or objects outside the vertical takeoff and landing aircraft 1 landing on the ground, and makes it possible to ensure safety.

### <Sixth Embodiment>

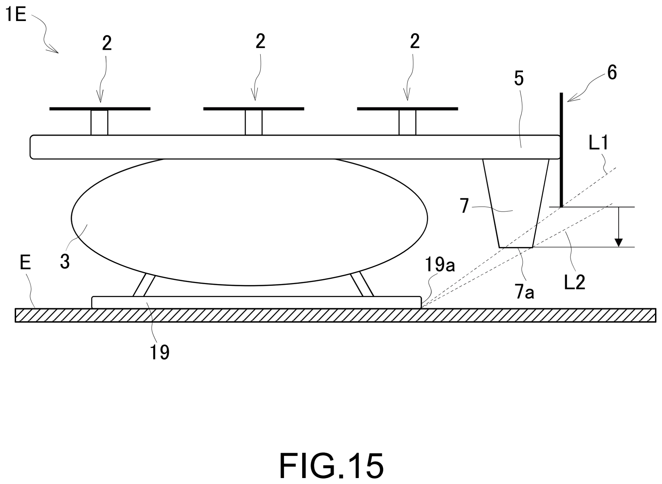

Fig. 15 is a schematic side view of a vertical takeoff and landing aircraft 1E according to a sixth embodiment.

As in the vertical takeoff and landing aircraft 1E shown in Fig. 15, a skid 19 for descent and landing may be attached to the bottom of the fuselage 3 such that the fuselage 3 does not come into direct contact with the ground E. For example, skids 19 as a pair are aligned in the right-left direction and extend parallel to the front-rear direction. The skids 19 may be of a type that can be retracted into the fuselage 3.

As shown in Fig. 15, the vertical tail 7 extending downward is provided at the lower rear of the rod-shaped support member 5. A tip 7a of the vertical tail 7 is favorably located lower than the rotating surface of the propulsion propeller 6 in the up-down direction. More favorably, as shown in Fig. 15, the tilt of an imaginary line L1, which passes through a rearmost portion 19a of the skid 19 and a lowermost end portion of the rotating surface of the propulsion propeller 6, with respect to the horizontal ground E is made larger than the tilt of an imaginary line L2, which passes through the rearmost portion 19a of the skid 19 and a rearmost portion of the tip 7a of the vertical tail 7, with respect to the horizontal ground E.

Such a configuration makes it possible to prevent the propulsion propeller 6 from coming into direct contact with the ground E during landing of the aircraft and simultaneously prevent the propulsion propeller 6 from being damaged and scattered due to the contact, thus enhancing the safety of the aircraft. In addition, during hard landing on the ground E due to the unstable attitude during landing, the vertical tail 7 touches the ground E before the propulsion propeller 6, thus making it possible to prevent damage to the propulsion propeller 6. Additionally, the vertical tail 7 is attached to the bottom of the rod-shaped support member 5 and the rotors 2 are arranged on the top of the rod-shaped support member 5, and thus the stability of the attitude is prevented from being reduced by the flow field interference of the downwash by the rotors 2, and the directional stability during forward flight is not significantly impaired.

### <Seventh Embodiment>

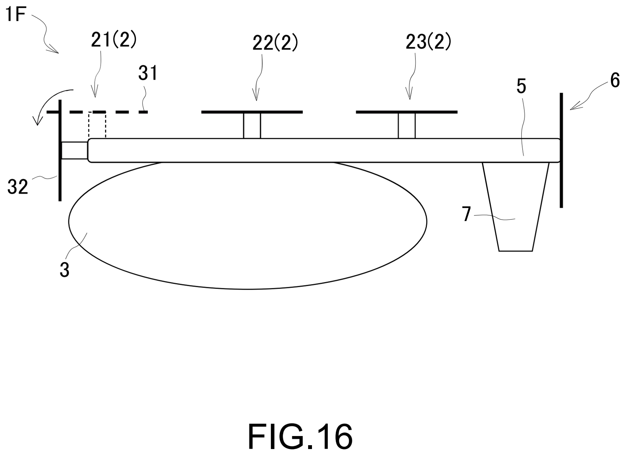

The controller 10 may control the rotating surfaces of the first rotors 21 (right-side first rotor 21R and left-side first rotor 21L) located most forward to be tilted forward with respect to the advance direction and cause the first rotors 21 to function as rotors for propulsion in addition to or instead of the propulsion propeller 6 during forward flight, as in a vertical takeoff and landing aircraft 1F shown in Fig. 16. In other words, during vertical takeoff and landing (climb/descent mode), the controller 10 controls the first rotors 21 such that the rotating surfaces take a horizontal attitude 31 (attitude substantially vertical to the up-down direction). On the other hand, during forward flight (forward flight mode), the controller 10 controls the first rotors 21 such that the rotating surfaces are tilted with respect to the advance direction, for example, take a vertical attitude 32 that is substantially vertical to the advance direction.

Here, the rotor 2 provided to the rod-shaped support member 5 generates a nose-up moment during forward flight and tries to change the attitude of the aircraft in the nose-up direction, which may impair the stability of the aircraft. In contrast, as in the vertical takeoff and landing aircraft 1F shown in Fig. 16, the first rotor 21 disposed most forward on the aircraft relative to the center of gravity of the aircraft is tilted forward during forward flight to function as a propulsion propeller, thereby making it possible to generate a nose-down moment around the center of gravity as well as propulsive force. This can reduce the nose-up moment and improve the stability of the aircraft.

### <Eighth Embodiment>

As described above, the rotor 2 provided to the rod-shaped support member 5 generates a nose-up moment during forward flight and tries to change the attitude of the aircraft in the nose-up direction, which may impair the stability of the aircraft. In contrast, in the first to sixth embodiments, during forward flight, the controller 10 may control the rotational speed of the rotor and/or the pitch angle of the blade such that the lift and drag are minimized without stopping the rotation of the first rotor 21 disposed most forward on the aircraft relative to the center of gravity of the aircraft. This makes it possible to reduce the nose-up moment and improve the stability of the aircraft. In addition, in this embodiment, since the first rotor 21 includes four blades 25, if the rotation of the first rotor 21 is completely stopped, the blades 25 protrude from the rod-shaped support member 5 in the right-left direction, and large drag is caused. However, if the first rotor 21 is continued to rotate constantly, the drag can be adjusted to be small.

### <Ninth Embodiment>

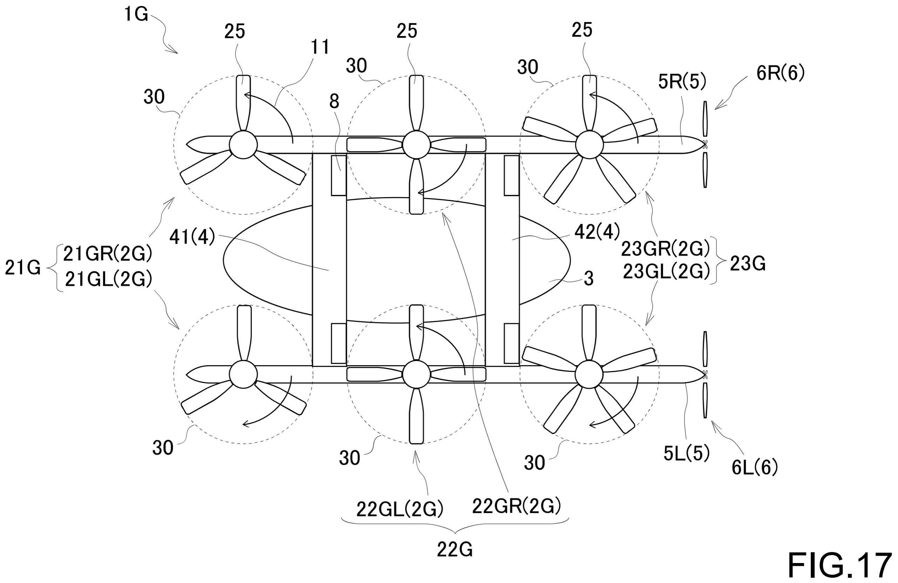

In the embodiments described above, the example in which the number of blades is the same in each rotor 2 has been escribed, but as in a vertical takeoff and landing aircraft 1G of this embodiment as shown in Fig. 17, the number of blades of a rotor 2G may be different. In this case, it is favorable that the value obtained by multiplying the number of blades by the area of each blade is equal in each rotor 2G, which makes it easy to adjust the value to obtain the equal lift in each rotor 2G.

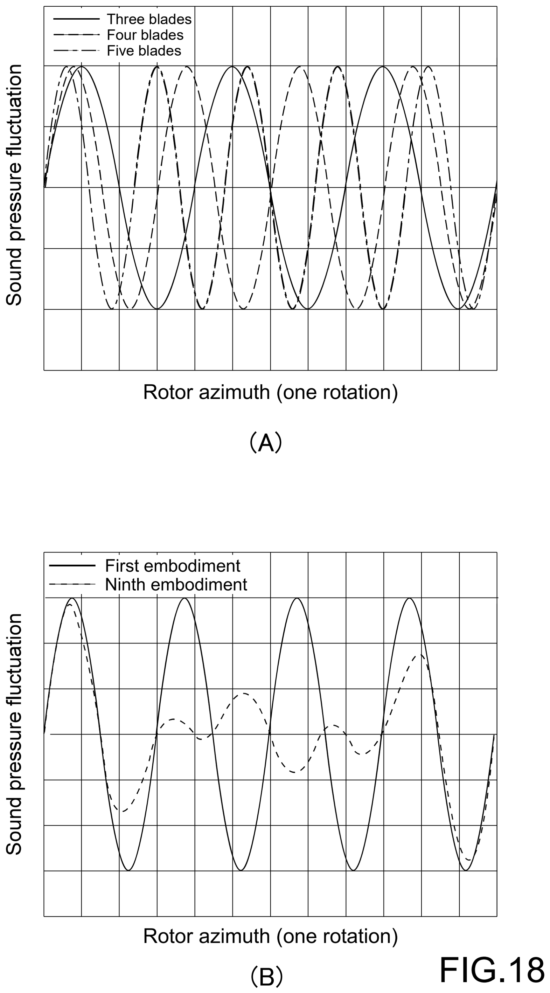

Fig. 17 is a schematic plan view of a vertical takeoff and landing aircraft 1G according to a ninth embodiment. (A) of Fig. 18 is a conceptual diagram showing sound pressure fluctuations, in which the solid line represents sound pressure fluctuations of a rotor including three blades, the broken line represents sound pressure fluctuations of a rotor including four blades, and the dash-dotted line represents sound pressure fluctuations of a rotor including five blades. (B) of Fig. 18 is a conceptual diagram showing sound pressure fluctuations, in which the solid line represents sound pressure fluctuations in the case where the number of blades in each rotor is the same, which corresponds to the first embodiment, and the broken line represents sound pressure fluctuations in the case where the number of blades in each rotor is different according to this embodiment.

The vertical takeoff and landing aircraft 1G includes a first rotor group 210G including two first rotors 21G (right-side first rotor 21GR and left-side first rotor 21GL) located most forward, a second rotor group 220G including two second rotors 22G (right-side second rotor 22GR and left-side second rotor 22GL) located at substantially the center in the front-rear direction, and a third rotor group 230G including two third rotors 23G (right-side third rotor 23GR and left-side third rotor 23GL) located most rearward, a total of six rotors. If there is no particular need to distinguish between those rotors, they are each referred to as a rotor 2G. The arrangement position and rotation direction of each rotor 2G are similar to those of the rotor 2 in the first embodiment.

The first rotor 21G includes three blades 25. The second rotor 22G includes four blades 25. The third rotor 23G includes five blades 25.

As shown in (A) of Fig. 18, the number of blades is varied, and thus a sound pressure fluctuation period related to the number of blades varies in each rotor, and the frequency changes. Thus, as shown in (B) of Fig. 18, in the ninth embodiment in which the number of blades in each rotor is different, the sound pressure fluctuations transmitted to a distant location are the composite of the sound pressure fluctuations generated by the rotors. A sound pressure level changes in a manner that the sound pressure fluctuations are reduced as compared to the first embodiment in which the number of blades in each rotor is the same, and thus noise can be reduced.

Various embodiments of the present invention have been described above, and those embodiments are examples, and the present invention is not limited to the specific embodiments disclosed herein. In addition, it is needless to say that the scope of the present invention is not limited to those embodiments. For example, in each of the above embodiments, the example of a vertical takeoff and landing aircraft including fixed wings has been given, but the aircraft may not include fixed wings, and lift during forward flight may be generated by rotors alone.

### Reference Signs List

1, 1A, 1B, 1C, 1D, 1E, 1F, 1G vertical takeoff and landing aircraft
2, 2G rotor for vertical climb and descent, rotor
3 fuselage
4 fixed wing
5, 5A rod-shaped support member
6 propulsion propeller
7 vertical tail
7a tip of vertical tail
8 flight control surface
10 controller
11 rotor rotation direction
16 storage device
21 first rotor, rotor, rotor located most forward 21R, 21GR right-side first rotor, rotor, rotor located most forward
21L, 21GL left-side first rotor, rotor, rotor located most forward
22 second rotor, rotor
   22R, 22GR right-side second rotor, rotor 22L, 22GL left-side second rotor, rotor
23 third rotor
   23R, 23GR right-side third rotor, rotor 23L, 23GL left-side third rotor, rotor
25 blade
30 rotating surface
161 rotational speed calculation data (first data)
162 pitch angle calculation data (second data)
210, 210G first rotor group
220, 220G second rotor group
230, 230G third rotor group

## Claims

1. A vertical takeoff and landing aircraft, comprising:
a pair of right and left rod-shaped support members that extend in a front-rear direction and are provided on both a right side and a left side;
a propulsion propeller;
two or more rotors for vertical climb and descent that are disposed on each of the rod-shaped support members in the front-rear direction, each include a plurality of blades, and rotate in a predetermined rotation direction to generate lift; and
a controller that rotates the rotor during forward flight and controls a rotational speed of the rotor and a pitch angle of the blade to obtain an advance ratio at which an effective lift-to-drag ratio of the rotor is a threshold or more, the advance ratio representing a ratio between a flight speed and a blade tip speed of the rotor.

2. The vertical takeoff and landing aircraft according to claim 1, wherein
the controller
acquires flight speed information of the vertical takeoff and landing aircraft,
uses the flight speed information to calculate a range of the rotational speed of the rotor to obtain an advance ratio at which the effective lift-to-drag ratio of the rotor is a threshold or more, on a basis of first data prepared in advance indicating a relationship between the effective lift-to-drag ratio of the rotor and the advance ratio,
uses the flight speed information to calculate a range of the pitch angle of the blade, in which lift necessary for the rotor is generated, within the calculated range of the rotational speed of the rotor, and
determines the rotational speed of the rotor and the pitch angle of the blade within the calculated range of the rotational speed of the rotor and the calculated range of the pitch angle of the blade.

3. The vertical takeoff and landing aircraft according to claim 2, wherein
the controller
acquires attitude information of the vertical takeoff and landing aircraft, and
determines the rotational speed of the rotor and the pitch angle of the blade while taking into consideration the attitude information.

4. The vertical takeoff and landing aircraft according to claim 2, further comprising
a storage device that stores the first data and second data indicating a relationship between the rotational speed of the rotor, the pitch angle of the blade, and the effective lift-to-drag ratio of the rotor for each flight speed, the first data and the second data being prepared in advance, wherein
the controller
uses, when calculating the rotational speed of the rotor, the flight speed information to calculate a range of the rotational speed of the rotor to obtain an advance ratio at which the effective lift-to-drag ratio of the rotor is a threshold or more, on a basis of the first data, and
uses, when calculating the range of the pitch angle of the blade, the flight speed information to calculate a range of the pitch angle of the blade, in which lift necessary for the rotor is generated, within the calculated range of the rotational speed of the rotor on a basis of the second data.

5. The vertical takeoff and landing aircraft according to claim 1, wherein
the advance ratio at which the effective lift-to-drag ratio of the rotor is a threshold or more is 0.5 or more.

6. The vertical takeoff and landing aircraft according to claim 2, wherein
the rotors are disposed in the same number on each of the rod-shaped support members to form a plurality of rotor groups each including a pair of right and left rotors, and
the controller controls the rotational speed of the rotor belonging to one rotor group of the plurality of rotor groups to be different from the rotational speed of the rotor belonging to another rotor group under a condition where the rotational speed of each rotor falls within the calculated range of the rotational speed of the rotor.

7. The vertical takeoff and landing aircraft according to claim 1, wherein
the controller controls the rotational speed of the rotor and the pitch angle of the blade to obtain an advance ratio at which the effective lift-to-drag ratio of the rotor is a threshold or more during forward flight at a flight speed of a predetermined speed or higher.

8. The vertical takeoff and landing aircraft according to claim 7, wherein
the predetermined speed is 100 km/h.

9. The vertical takeoff and landing aircraft according to claim 1, wherein
the controller rotates two of the rotors adjacent to each other one behind the other, the centers of the rotors being located on an identical straight line parallel to the front-rear direction, in opposite rotation directions during the forward flight.

10. The vertical takeoff and landing aircraft according to claim 9, wherein
three of the rotors are disposed on each of the rod-shaped support members such that the centers of the three rotors are located on the identical straight line parallel to the front-rear direction,
the three rotors disposed on the rod-shaped support member on the right side are a right-side first rotor, a right-side second rotor, and a right-side third rotor arranged sequentially from front to rear,
the three rotors disposed on the rod-shaped support member on the left side are a left-side first rotor, a left-side second rotor, and a left-side third rotor arranged sequentially from front to rear, and
the controller rotates the right-side first rotor, the right-side third rotor, and the left-side second rotor in a counterclockwise rotation direction and rotates the right-side second rotor, the left-side first rotor, and the left-side third rotor in a clockwise rotation direction when viewed from above.

11. The vertical takeoff and landing aircraft according to claim 1, wherein
in the two or more rotors disposed on each of the rod-shaped support members, two rotors adjacent to each other in the front-rear direction are located with the center of one of the two rotors being shifted from the center of another one of the two rotors in a right-left direction.

12. The vertical takeoff and landing aircraft according to claim 11, wherein
three of the rotors are disposed on each of the rod-shaped support members at an identical position in the up-down direction,
the three rotors disposed on the rod-shaped support member on the right side are a right-side first rotor, a right-side second rotor, and a right-side third rotor arranged sequentially from front to rear,
the three rotors disposed on the rod-shaped support member on the left side are a left-side first rotor, a left-side second rotor, and a left-side third rotor arranged sequentially from front to rear,
the right-side second rotor is shifted outward in the right-left direction relative to the right-side first rotor and the right-side third rotor by a radius of a rotating surface of the rotor,
the left-side second rotor is shifted outward in the right-left direction relative to the left-side first rotor and the left-side third rotor by the radius of the rotating surface of the rotor, and
the controller rotates the right-side first rotor, the right-side second rotor, and the left-side third rotor in a counterclockwise rotation direction and rotates the right-side third rotor, the left-side first rotor, and the left-side second rotor in a clockwise rotation direction when viewed from above.

13. The vertical takeoff and landing aircraft according to claim 1, wherein
three or more of the rotors are disposed on each of the rod-shaped support members.

14. The vertical takeoff and landing aircraft according to claim 13, wherein
the rotors are disposed in the same number on each of the rod-shaped support members to form a plurality of rotor groups each including a pair of right and left rotors, and
the rotors belonging to one rotor group of the plurality of rotor groups are different in position in the up-down direction from the rotors belonging to another rotor group.

15. The vertical takeoff and landing aircraft according to claim 14, wherein
three of the rotors are disposed on each of the rod-shaped support members on an identical straight line parallel to the front-rear direction in plan view,
the three rotors disposed on the rod-shaped support member on the right side are a right-side first rotor, a right-side second rotor, and a right-side third rotor arranged sequentially from front to rear,
the three rotors disposed on the rod-shaped support member on the left side are a left-side first rotor, a left-side second rotor, and a left-side third rotor arranged sequentially from front to rear,
the right-side first rotor, the right-side second rotor, the left-side first rotor, and the left-side second rotor are located at an identical position in the up-down direction, and the right-side third rotor and the left-side third rotor are located at a position higher than the right-side first rotor, the right-side second rotor, the left-side first rotor, and the left-side second rotor, and
the controller rotates the right-side first rotor, the right-side third rotor, and the left-side second rotor in a counterclockwise rotation direction and rotates the right-side second rotor, the left-side first rotor, and the left-side third rotor in a clockwise rotation direction when viewed from above.

16. The vertical takeoff and landing aircraft according to claim 14, wherein
three of the rotors are disposed on each of the rod-shaped support members on an identical straight line parallel to the front-rear direction in plan view,
the three rotors disposed on the rod-shaped support member on the right side are a right-side first rotor, a right-side second rotor, and a right-side third rotor arranged sequentially from front to rear,
the three rotors disposed on the rod-shaped support member on the left side are a left-side first rotor, a left-side second rotor, and a left-side third rotor arranged sequentially from front to rear,
the right-side first rotor, the right-side third rotor, the left-side first rotor, and the left-side third rotor are located at an identical position in the up-down direction, and the right-side second rotor and the left-side second rotor are located at a position higher than the right-side first rotor, the right-side third rotor, the left-side first rotor, and the left-side third rotor, and
the controller rotates the right-side first rotor, the right-side second rotor, and the left-side third rotor in a counterclockwise rotation direction and rotates the right-side third rotor, the left-side first rotor, and the left-side second rotor in a clockwise rotation direction when viewed from above.

17. The vertical takeoff and landing aircraft according to claim 1, further comprising:
a fuselage; and
a fixed wing that is connected to the fuselage and extends in a right-left direction to couple the pair of right and left rod-shaped support members to each other.

18. The vertical takeoff and landing aircraft according to claim 17, further comprising
a flight control surface that is disposed on the fixed wing and generates harmonic vibration in an opposite phase of vibration derived from the rotor.

19. The vertical takeoff and landing aircraft according to claim 1, wherein
the rotor is disposed on a bottom of the rod-shaped support member.

20. The vertical takeoff and landing aircraft according to claim 1, further comprising
a vertical tail that is disposed on a lower rear of the rod-shaped support member and extends downward, wherein
a tip of the vertical tail is located at a position lower than a rotating surface of the propulsion propeller.

21. The vertical takeoff and landing aircraft according to claim 1, wherein
the controller controls a rotor located most forward to tilt a rotating surface of the rotor forward with respect to an advance direction and causes the rotor to function as a rotor for propulsion in addition to or instead of the propulsion propeller during forward flight.

22. The vertical takeoff and landing aircraft according to claim 1, wherein
the controller controls the rotational speed of a rotor located most forward and/or the pitch angle of the blade of the rotor located most forward such that lift and drag of the rotor located most forward are minimized during forward flight.

23. The vertical takeoff and landing aircraft according to claim 1, wherein
the rotors are disposed in the same number on each of the rod-shaped support members to form a plurality of rotor groups each including a pair of right and left rotors, and
the number of blades of the rotors belonging to one rotor group of the plurality of rotor groups is different from the number of blades of the rotors belonging to another rotor group.
